# FASCICULE DE BREVET EUROPEEN

(11) **EP 4 384 585 B1**
(45) Date de publication et mention de la délivrance du brevet: **01.10.2025**
(21) Numéro de dépôt: 22772792.2
(22) Date de dépôt: 12.08.2022
(51) Int. Cl.: C10G 1/08, C10G 1/10

(54) **PROCÉDÉ ET DISPOSITIF DE PRODUCTION DE PRODUITS DE VALORISATION PAR CRAQUAGE CATALYTIQUE D'UN MATÉRIAU SOLIDE HYDROCARBONÉ SANS FORMATION DE COKE**
VERFAHREN UND VORRICHTUNG ZUR HERSTELLUNG VON ENERGIEPRODUKTEN DURCH KATALYTISCHES CRACKEN EINES FESTEN KOHLENWASSERSTOFFMATERIALS OHNE KOKSBILDUNG
METHOD AND DEVICE FOR THE PRODUCTION OF ENERGY PRODUCTS BY CATALYTIC CRACKING OF A SOLID HYDROCARBON MATERIAL WITHOUT FORMATION OF COKE

(30) Priorité: 13.08.2021 FR 2108691
(43) Date de publication de la demande: 19.06.2024
(73) Titulaire: D.M.S, 31000 Toulouse (FR)
(72) Inventeur: DUMONS, Pierre, 31000 TOULOUSE (FR)
(74) Mandataire: BARRE LAFORGUE
(86) Numéro de dépôt international: PCT/EP2022/072668
(87) Numéro de publication internationale: WO 2023/017150

(56) Documents cités:
- WO-A1-2016/116484
- WO-A1-2020/182337
- DE-A1- 102010 060 675

## Description

L'invention concerne un procédé et un dispositif de production de produits de valorisation par craquage catalytique à basse température d'un matériau solide -notamment d'un déchet- à l'état morcelé et comprenant au moins un composé hydrocarboné, sans formation de coke, de dioxines et/ou de furannes.

Un tel procédé et un tel dispositif sont adaptés pour pouvoir permettre la production de produits de valorisation tels que :
- du dioxyde de carbone (CO₂) susceptible d'être utilisé pour la synthèse d'alcanes, et/ou ;
- du dihydrogène (H₂) gazeux qualifié de dihydrogène (H₂) « vert » dès lors qu'il est issu de la décomposition de biomasse renouvelable et/ou d'un déchet, et/ou
- des hydrocarbures insaturés -notamment des hydrocarbures à chaines carbonées linéaires- (tels que des alcènes) recyclés, adaptés pour être utilisés lors de la production de polymères synthétiques (PE, PVC, PP, PET, PMMA, par exemple), mais aussi susceptibles de réagir avec du dihydrogène (H₂) gazeux et former des produits énergétiques tels que des carburants, et/ou
- des produits énergétiques tels que des hydrocarbures (alcanes) saturés, dits « diesel » ou « gazole », « essence » ou « kérosène », à chaînes courtes -comprenant un nombre d'atomes de carbone compris entre 1 (CH₄) et 18 (C₁₈H₃₈)-, aptes à être utilisés à titre de carburant pour un moteur à essence ou pour un moteur diesel ou pour un turboréacteur ou pour un turbocompresseur.

L'invention concerne donc en particulier un tel procédé et un tel dispositif permettant de transformer un matériau solide contenant au moins un composé hydrocarboné -notamment un tel matériau considéré comme un déchet- et de le valoriser sous la forme de produits de valorisation, de plus haute valeur ajoutée, notamment sous la forme de produits énergétiques tels que des carburants, du dihydrogène et/ou du dioxyde de carbone et/ou des hydrocarbures insaturés. Un tel matériau et un tel déchet peuvent comprendre de la biomasse, des dérivés du pétrole et/ou des leurs déchets, tels que des matériaux polymères synthétiques autrement nommées matières « plastiques ». Un tel matériau et un tel déchet peuvent comprendre une fraction non inerte de déchets ménagers. Un tel matériau et un tel déchet peuvent notamment résulter d'une opération de tri sélectif de déchets ménagers.

Dans tout le texte :
- le terme « craquage » désigne la réaction thermique de conversion d'un composé hydrocarboné en hydrocarbures de poids moléculaires plus faibles que le poids moléculaire du composé hydrocarboné, impliquant une rupture de liaisons interatomiques covalentes ;
- l'expression « matériau hydrocarboné » désigne un matériau comprenant au moins un composé hydrocarboné, c'est-à-dire au moins un composé formé majoritairement d'atomes de carbone et d'atomes d'hydrogène. Il peut s'agir d'un matériau formé exclusivement de composés hydrocarbonés. Il peut aussi s'agir d'un matériau comprenant au moins un composé hydrocarboné et au moins un composé exempt de carbone et d'hydrogène. Un tel matériau hydrocarboné peut comprendre au moins un composé hydrocarboné présentant au moins un hétéroatome tel que, par exemple, l'oxygène (O), l'azote (N), le phosphore (P), le soufre (S), au moins un halogène (Cℓ, Br, F, I), etc. Un tel « matériau hydrocarboné » peut être un matériau comprenant de la biomasse. Un tel composé hydrocarboné peut comprendre de la biomasse et/ou des dérivés du pétrole et/ou de leurs déchets ;
- le terme « déchet » désigne une part non utilisée d'une matière, pouvant faire l'objet d'un retraitement approprié en vue de son élimination ou de son stockage. Il peut s'agir par exemple d'un déchet industriel, d'un déchet agricole -telles que des parties non valorisées de plantes- ou d'un déchet ménager.

DE10210060675 décrit un procédé et un dispositif de craquage catalytique sous vide, d'une matière contenant des hydrocarbures, à une température comprise entre 250° et 360°C. Dans DE10210060675, le vide est produit au moyen d'une pompe à vide. Le maintien sous un vide contrôlé de l'atmosphère d'un réacteur de craquage dans lequel des composés à l'état gazeux sont de produits en continu pose problème. Il est techniquement complexe dans sa mise en œuvre et nécessairement économiquement non rentable. WO 2020/182337 décrit un procédé et un dispositif de production d'au moins un produit énergétique par craquage catalytique à basse température.

L'invention vise à pallier cet inconvénient.

L'invention vise donc à proposer un procédé et un dispositif de craquage catalytique à basse température et sous pression réduite qui permet un contrôle facilité de ladite pression réduite en cours de craquage catalytique.

On connait aussi de WO2018/127438 un procédé et un dispositif de production de carburant par craquage catalytique d'un matériau solide hydrocarboné sans formation de coke, de dioxines et/ou de furannes. WO2018/127438 décrit de chauffer une dispersion d'un matériau solide à l'état divisé comprenant au moins un composé hydrocarboné, d'un catalyseur de craquage et d'un composé alcalin, dans une huile inerte vis-à-vis du craquage, à une température supérieure à la température de craquage d'au moins un composé hydrocarboné du matériau solide, mais inférieure à la température de formation d'un sous-produit carboné indésirable, le coke, susceptible de se former au contact d'une paroi métallique d'un dispositif de chauffage par conduction, notamment d'une telle paroi métallique comprenant du fer ou du nickel et portée à une température supérieure ou égale à 400°C ou au contact d'une telle paroi métallique portée à une température supérieure ou égale à 360°C dès lors que du coke est déjà formé sur cette paroi métallique, la formation de coke au contact de la paroi métallique du dispositif de chauffage par conduction réduisant la conduction thermique et rendant le dispositif de chauffage rapidement inopérant.

Pour éviter de chauffer la dispersion de craquage par mise en contact de la dispersion de craquage avec la paroi métallique d'un dispositif de chauffage par conduction chauffée nécessairement à une température supérieure à 400°C ou à 360°C pour que la dispersion de craquage atteigne la température de craquage, WO2018/127438 propose de chauffer la dispersion de craquage par mélange d'une quantité de cette dispersion de craquage préparée à une température inférieure à la température de craquage de chaque composé hydrocarboné et inférieure à la température de formation de coke, et d'une quantité d'huile inerte sensiblement exempt de matériau solide à l'état divisé et de catalyseur, le liquide inerte étant porté à une température supérieure à la température de craquage, de sorte que le mélange formé atteigne une température au moins égale à la température de craquage et inférieure à la température de formation de coke.

Le problème de la formation de coke est résolu par le procédé de WO2018/127438.

Cela étant, des solutions industrielles sont recherchées pour améliorer le rendement de la réaction de craquage et pour obtenir, en quantités significatives, des produits de valorisation renouvelables. En particulier, des solutions sont recherchées pour permettre de transformer des matériaux solides comprenant des composés hydrocarbonés ou leurs déchets en de tels produits de valorisation, notamment en dioxyde de carbone, en produits énergétiques et/ou en dihydrogène, par une voie thermochimique à basse température, sans formation de coke, de dioxines et/ou de furannes. De telles solutions sont recherchées pour obtenir de tels produits de valorisation dont le coût de production est comparable au coût de production des produits équivalents issus de ressources fossiles, et dont la production permet une réduction massive des émissions de gaz à effet de serre, notamment par la suppression de telles émissions par les traitements connus de ces déchets.

L'invention vise donc à proposer un procédé et un dispositif de production de produits de valorisation par craquage catalytique à basse température d'un matériau solide comprenant au moins un composé hydrocarboné qui soient suffisamment simples et fiables dans leur mise en œuvre et dans leur utilisation pour permettre une exploitation à l'échelle industrielle.

L'invention vise en particulier à proposer un tel procédé et un tel dispositif qui permettent d'éviter la formation de coke, de dioxines et/ou de furannes.

L'invention vise en particulier à proposer un tel procédé et un tel dispositif susceptible de pouvoir être au moins partiellement automatisés.

L'invention vise ainsi à proposer un tel procédé et un tel dispositif permettant de produire des produits de valorisation avec un rendement qui soit compatible avec une production à l'échelle industrielle.

L'invention vise également à proposer un tel procédé et un tel dispositif dans lesquels les apports nécessaires en énergie sont optimisés et dans lesquels le bilan énergétique global de la production de ces produits de valorisation -notamment de dioxyde de carbone, d'hydrocarbures insaturés, de produits énergétiques tels que des carburants et/ou de dihydrogène- est optimisé.

L'invention vise également à proposer un tel procédé et un tel dispositif permettant une transformation quasi complète d'un matériau solide tel qu'un déchet, comprenant au moins un composé hydrocarboné -notamment d'un matériau solide comprenant de la biomasse et/ou des dérivés du pétrole et/ou des déchets de tels dérivés du pétroleen produits de valorisation tels qu'ils résultent de la décomposition par craquage catalytique à basse température du matériau solide à l'état morcelé, la décomposition par craquage catalytique étant immédiatement suivie d'une recomposition des produits de décomposition en alcènes et, du fait de la décomposition de la biomasse, en dihydrogène (H₂) et/ou en dioxyde de carbone (CO₂) et de l'hydrogénation des alcènes en alcanes constitutifs de carburants. L'invention vise en particulier à proposer un tel procédé et un tel dispositif permettant de produire du dioxyde de carbone (CO₂) pouvant être utilisé comme réactif dans une synthèse d'alcanes carburants, dont le coût de fabrication est économiquement acceptable. L'invention vise en particulier à proposer un tel procédé et un tel dispositif alternatifs à l'extraction de dioxyde de carbone atmosphérique.

L'invention vise aussi à proposer un tel procédé et un tel dispositif permettant une production de tels produits de valorisation en continu, c'est-à-dire sans rupture de charge et dans un temps court.

Pour ce faire, l'invention concerne un procédé de production d'au moins un produit de valorisation -notamment d'au moins un produit de valorisation choisi dans le groupe formé des produits énergétiques tel que les carburants (alcanes), des alcène(s), du dihydrogène (H₂) gazeux et du dioxyde de carbone (CO₂)-, par craquage catalytique à basse température d'un matériau -notamment d'un déchet- solide à l'état morcelé, sans formation de coke, de dioxines et/ou de furannes, tel que décrit dans la revendication 1.

Par un tel procédé selon l'invention, on transforme par craquage catalytique à basse température, au moins un composé hydrocarboné d'un matériau solide à l'état morcelé en un produit de valorisation de masse moléculaire inférieure à la masse moléculaire du composé hydrocarboné. En particulier, on transforme un tel composé hydrocarboné en un produit de valorisation, notamment choisi dans le groupe formé des alcane(s) et des alcène(s), du dihydrogène (H₂) gazeux et du dioxyde de carbone (CO₂), sans formation de coke, de dioxines et/ou de furannes dès lors que ladite température de craquage est inférieure à la température de formation de coke, de dioxines et/ou de furannes.

Le craquage dudit matériau solide à l'état morcelé -notamment dudit matériau solide à l'état morcelé comprenant de la biomasse et/ou des composés polymères dérivés du pétrole et/ou des déchets issus de tels composés polymères- s'accompagne instantanément d'une recomposition d'alcènes et, à partir de la décomposition de biomasse, de dioxyde de carbone ainsi que de dihydrogène suivie d'une hydrogénation d'alcènes en alcanes formant des carburants, sans formation de coke, de dioxines et/ou de furannes.

Selon le choix du matériau de départ -notamment du déchet- et sa composition en composés hydrocarbonés, on transforme au moins un composé hydrocarboné en produits de valorisation tels que des hydrocarbures insaturés et du dihydrogène (H₂) gazeux. En particulier, on forme notamment du dihydrogène (H₂) et, le cas échéant, du dioxyde de carbone (CO₂) par craquage catalytique d'un matériau contenant de la biomasse. Dès lors, selon le choix et la composition du matériau de départ, il est possible d'orienter le craquage catalytique vers une production finale prépondérante de dioxyde de carbone et de dihydrogène (H₂) gazeux vers l'hydrogénation d'hydrocarbures insaturés ou alcènes en hydrocarbures saturés constitutifs de carburants.

L'inventeur a observé que la réaction de craquage catalytique se produit après initiation de la réaction, au moins pour partie -notamment pour l'essentiel- dans une mousse ternaire solide/liquide/gaz de craquage en expansion formée, du fait de l'initiation du craquage, à l'interface s'étendant entre ladite dispersion de craquage et l'atmosphère gazeuse surmontant ladite dispersion de craquage. Il a déterminé qu'il est avantageux de maintenir cette atmosphère gazeuse en dépression pour favoriser le craquage catalytique, notamment sans formation de coke, de dioxines et/ou de furannes. Cette mousse ternaire formée lors du craquage est constituée de solides, tels que le matériau solide à l'état morcelé, de catalyseur(s), de composé alcalin et de liquide essentiellement sous forme de ladite huile de craquage et d'une composition gazeuse formée du fait du craquage catalytique et comprenant notamment des hydrocarbures à chaînes courtes, du dioxyde de carbone (CO₂), de la vapeur d'eau, du dihydrogène (H₂) gazeux. Un tel craquage catalytique est obtenu dans une atmosphère gazeuse sous une pression réduite, dite pression de craquage, abaissant la quantité d'énergie nécessaire à la fragmentation et à la dissociation des composés hydrocarbonés en produits de valorisation à l'état gazeux en présence d'un catalyseur de craquage et d'atteindre ce craquage à une température de craquage inférieure à ladite température de craquage des mêmes composés hydrocarboné à la pression atmosphérique. Un tel craquage catalytique est ainsi obtenu sous pression réduite et à température inférieure à la température de formation de coke, de dioxines et/ou de furannes.

En outre, ladite pression de craquage inférieure à la pression atmosphérique à laquelle est soumise ladite dispersion de craquage elle-même préalablement au moins en partie dégazée et désoxygénée permet de limiter la pression partielle en oxygène dans l'atmosphère gazeuse surmontant ladite dispersion de craquage et permet de limiter, voire supprimer totalement, une combustion exothermique non contrôlée de dihydrogène (H₂) gazeux formé du fait du craquage catalytique, une production consécutive de vapeur d'eau du fait de cette combustion et un échauffement lui-même non contrôlé de ladite dispersion de craquage, du fait de cette combustion exothermique non contrôlée de dihydrogène (H₂) gazeux.

Selon l'invention, on choisit ladite huile de craquage de façon que sa température de vaporisation soit très supérieure à ladite température de craquage de chaque composé hydrocarboné de ladite dispersion de craquage à la pression de craquage. Ainsi, ladite huile de craquage qui est inerte vis-à-vis du craquage catalytique reste en outre à l'état liquide lors du craquage catalytique.

Selon certains modes de réalisation, ladite pression de craquage est au plus égale à 100 hPa, notamment au plus égale à 60 hPa, de préférence comprise entre 30 hPa et 50 hPa et permet un craquage catalytique d'au moins un -notamment de chaque- composé hydrocarboné à basse température, sans formation de coke, de dioxines et/ou de furannes.

Selon l'invention, l'atmosphère gazeuse est maintenue à ladite pression de craquage par une communication d'échange gazeux entre l'atmosphère gazeuse dudit réacteur de craquage et l'atmosphère gazeuse d'un dispositif, dit condenseur primaire ou pompe à vide thermochimique, générateur d'une dépression formée du fait d'un changement d'état, -d'un état gazeux expansé à un état liquide condensé,- d'une deuxième huile inerte, dite huile de condensation, chauffée à reflux à une température supérieure à la température de vaporisation de ladite huile de condensation à ladite pression de craquage dans ladite pompe à vide thermochimique, le changement d'état de l'état gazeux expansé à l'état liquide condensé étant provoqué dans ladite pompe à vide thermochimique en communication d'échange gazeux avec l'atmosphère gazeuse dudit réacteur de craquage,
ladite huile de condensation étant choisie pour que sa température de changement d'état soit au niveau de ladite température de craquage à ladite pression de craquage.

Ladite huile de condensation est choisie pour présenter une température de changement d'état au niveau de la température de craquage quand la pression est au niveau de ladite pression de craquage et, supérieure à la température de condensation (à ladite pression de craquage) de chaque produit de valorisation formé du fait du craquage catalytique.

Selon l'invention, préalablement à l'initiation du craquage catalytique à basse température, l'atmosphère gazeuse commune du réacteur de craquage et de ladite pompe à vide thermochimique est portée à une pression, dite pression d'initiation, inférieure à ladite pression de craquage, par tout moyen de pompage, par exemple au moyen d'une pompe (pompe à vide) mécanique. Puis, après l'initiation du craquage, l'atmosphère commune du réacteur de craquage et de ladite pompe à vide thermochimique est maintenue en dépression au moyen de ladite pompe à vide thermochimique.

Selon l'invention, les apports nécessaires en énergie pour le maintien de l'atmosphère du réacteur de craquage à ladite pression de craquage sont optimisés et le bilan énergétique global de la production de ces produits de valorisation est aussi optimisé.

Ladite huile de condensation est inerte vis-à-vis du craquage catalytique, c'est-à-dire qu'elle ne subit pas de modification chimique lorsqu'elle est placée dans des conditions de température et de pression propres à ses changements d'état et au contact des produits de valorisation à l'état gazeux.

Dans ladite pompe à vide thermochimique en communication d'échange gazeux avec l'atmosphère gazeuse dudit réacteur de craquage, le changement d'état (vaporisation) de l'état liquide condensé à l'état gazeux expansé de ladite huile de condensation est provoqué par un chauffage de ladite huile de condensation à reflux dans un contenant, dit bouilleur, d'un organe de chauffage formant une partie inférieure de ladite pompe à vide thermochimique et à une température supérieure (de peu supérieure) à la température de vaporisation de ladite huile de condensation à ladite pression de craquage.

Selon l'invention, le changement d'état de ladite huile de condensation, de l'état gazeux expansé à l'état liquide condensé est initié dans un tronçon, dit tronçon de condensation, inférieur d'un organe tubulaire de ladite pompe à vide thermochimique, l'organe tubulaire permettant un acheminement des produits de valorisation formés dans le réacteur de craquage du fait du craquage, vers un dispositif de condensation fractionnée,
ledit tronçon de condensation étant en communication de fluide gazeux avec l'atmosphère gazeuse du réacteur de craquage ;
ledit tronçon de condensation étant adapté pour pouvoir recevoir le débit de ladite huile de condensation à l'état gazeux, abaisser la température de ladite huile de condensation à l'état gazeux à une température inférieure à la température de condensation de ladite huile de condensation à ladite pression de craquage, permettre une condensation du débit de ladite huile de condensation de l'état gazeux expansé à l'état liquide condensé, et générer la dépression du fait de cette condensation.

Le changement d'état de ladite huile de condensation de l'état gazeux expansé à l'état liquide condensé est induit dans ledit tronçon de condensation dont l'atmosphère est en communication de fluide gazeux avec l'atmosphère gazeuse du réacteur de craquage. Ce changement d'état est provoqué par un refroidissement des vapeurs de ladite huile de condensation dans ledit tronçon de condensation. Ce changement d'état produit dans l'atmosphère de ladite pompe à vide thermochimique et dans l'atmosphère gazeuse dudit réacteur de craquage, une dépression compensatrice d'une surpression formée dans le réacteur de craquage du fait de la production des produits de valorisation à l'état gazeux formés du fait du craquage catalytique. Ainsi, la température des vapeurs (de ladite huile de condensation et des produits de valorisation issus du craquage) étant maintenue constante du fait des chauffages respectifs, toute fluctuation de la pression autour de la pression de changement d'état de ladite huile de condensation et autour de ladite pression de craquage entraine une intensification ou un arrêt de la condensation de ladite huile de condensation s'opposant à cette fluctuation.

Après l'établissement de ladite pression de craquage dans le réacteur de craquage, une augmentation de la pression dans l'atmosphère du réacteur de craquage (par exemple par une production augmentée de produits de valorisation) favorise une condensation de ladite huile de condensation de l'état gazeux expansé à l'état liquide condensé dans ladite pompe à vide thermochimique et une diminution de la pression compensatrice de cette augmentation. A l'inverse, un déclin de la pression dans l'atmosphère du réacteur de craquage (par exemple par une production diminuée de produits de valorisation) favorise une vaporisation de ladite huile de condensation de l'état liquide condensé à l'état gazeux expansé dans ladite pompe à vide thermochimique et une augmentation de la pression compensatrice de ce déclin. La pression dans l'atmosphère de ladite pompe à vide thermochimique et dans l'atmosphère dudit réacteur de craquage est stabilisée au niveau de ladite pression de craquage. Ladite pompe à vide thermochimique fait office de pompe de maintien en dépression stable, de l'atmosphère du réacteur de craquage.

L'inventeur a déterminé qu'il est possible et avantageux de maintenir en dépression - c'est-à-dire à une pression inférieure à la pression atmosphérique, notamment à une pression au plus égale à 100 hPa, notamment au plus égale à 60 hPa, de préférence comprise entre 30 hPa et 50 hPa- l'atmosphère gazeuse au contact de ladite dispersion de craquage en cours de craquage au moyen de ladite pompe à vide thermochimique. Dans ladite pompe à vide thermochimique, ladite huile de condensation subit, à ladite pression de craquage, une succession dynamique de changements d'état entre un état gazeux expansé à une température légèrement supérieure à la température de vaporisation de ladite huile de condensation (à ladite pression de craquage), et un état liquide condensé à une température légèrement inférieure à la température de vaporisation de ladite huile de condensation dans ledit tronçon de condensation. La pression est stabilisée au niveau de ladite pression de craquage, dès lors que la température est maintenue au niveau de ladite température de craquage par les moyens de chauffage ajustable dudit bouilleur et du réacteur de craquage. Une augmentation de la pression par rapport à ladite pression de craquage dans l'atmosphère dudit tronçon de condensation et du réacteur de craquage tend à arrêter la production de vapeurs et à faire baisser la pression. Une diminution de la pression par rapport à ladite pression de craquage dans l'atmosphère dudit tronçon de condensation et du réacteur de craquage tend à favoriser la production de vapeurs et à augmenter la pression.

Ledit tronçon de condensation constitue une partie inférieure de l'organe tubulaire de ladite pompe à vide thermochimique, l'organe tubulaire permettant un acheminement des produits de valorisation formés dans le réacteur de craquage du fait du craquage, vers un dispositif de condensation fractionnée adapté pour permettre une condensation sélective des hydrocarbures puis, le cas échéant, une séparation par osmose de dioxyde de carbone et de dihydrogène gazeux. Ledit tronçon de condensation étant en communication de fluide gazeux avec l'atmosphère gazeuse du réacteur de craquage, il est adapté pour pouvoir recevoir le débit de ladite huile de condensation à l'état gazeux, abaisser la température de ladite huile de condensation à l'état gazeux à une température inférieure à la température de condensation de ladite huile de condensation à ladite pression de craquage, permettre une condensation du débit de ladite huile de condensation de l'état gazeux expansé à l'état liquide condensé, générer la dépression du fait de cette condensation et permettre un retour de ladite huile de condensation à l'état liquide condensé vers et dans ledit bouilleur. On maintient l'atmosphère gazeuse du réacteur de craquage en dépression à ladite pression de craquage du fait de cette condensation dans ledit tronçon de condensation.

Selon certains modes de réalisation, le changement d'état de ladite huile de condensation de l'état gazeux expansé à l'état liquide condensé se poursuit en partie inférieure d'un tronçon, dit tronçon de perte de charge, intermédiaire de l'organe tubulaire, surmontant ledit tronçon de condensation, et présentant un organe poreux comprenant un maillage métallique adapté pour :
- permettre un échange thermique avec ladite huile de condensation et un changement d'état de ladite huile de condensation de l'état gazeux expansé à l'état liquide condensé, et ;
- maintenir, en dynamique, du fait d'une perte de charge, une différence de pression entre ledit tronçon de condensation et la partie supérieure de l'organe tubulaire.

Ledit tronçon de perte de charge est adapté pour maintenir, en dynamique, une différence de pression entre ledit tronçon de condensation et une partie supérieure de l'organe tubulaire s'étendant au-dessus dudit tronçon de perte de charge.

L'inventeur a déterminé que le chauffage de ladite huile de condensation à reflux contrôlé à une température (peu) supérieure à sa température de vaporisation à ladite pression de craquage s'accompagne d'une succession de changements d'état de ladite huile de condensation entre l'état gazeux expansé et l'état liquide condensé et que cette succession de changements d'état permet d'instaurer un régime dynamique continu de vaporisation/condensation de ladite huile de condensation dans ladite pompe à vide thermochimique. Ce régime dynamique est créateur d'un espace de vide instantanément comblé par un courant ascendant formé par le mélange des produits de valorisation à l'état gazeux issus du craquage et de la vapeur de ladite huile de condensation. Ladite huile de condensation retombant dans ledit bouilleur après condensation dans ledit tronçon de condensation, les vapeurs de craquage formées des produits de valorisation à l'état gazeux, dans l'impossibilité de redescendre à l'encontre du courant ascendant de plus forte masse volumique, s'accumulent en partie haute dudit tronçon de condensation et dans le bas dudit tronçon de perte de charge sous l'effet d'une pression dynamique exercée par ce courant ascendant.

Selon ces modes de réalisation, l'organe poreux -notamment formé d'un maillage métallique de haute densité- est un organe générateur de la perte de charge et permettant de maintenir une différence de pression dynamique entre ledit tronçon de condensation, et un tronçon, dit tronçon de tirage thermique, supérieur de l'organe tubulaire.

Selon certains modes de réalisation, le changement d'état de ladite huile de condensation de l'état gazeux expansé à l'état liquide condensé est complété dans ledit tronçon de perte de charge. Selon ces modes de réalisation, l'organe poreux dudit tronçon de perte de charge -notamment le maillage métallique de haute densité- est adapté pour favoriser les échanges thermiques avec ladite huile de condensation, pour favoriser le changement d'état de ladite huile de condensation de l'état gazeux expansé à l'état liquide condensé initié dans ledit tronçon de condensation et complété au contact du maillage métallique dudit tronçon de perte de charge et pour permettre de maintenir la dépression dans le réacteur de craquage.

Selon certains modes de réalisation, ledit tronçon de perte de charge peut être muni d'une gaine réfrigérante périphérique externe permettant de compléter la condensation du débit de ladite huile de condensation de l'état gazeux expansé à l'état liquide condensé.

Le chauffage à reflux de ladite huile de condensation permet de former un débit de ladite huile de condensation à l'état gazeux expansé vers ledit tronçon de condensation et une condensation, dans ledit tronçon de condensation, de ce débit de ladite huile de condensation à l'état gazeux expansé et de maintenir dans le temps une phase dynamique de condensation de ladite huile de condensation, génératrice d'une dépression maintenue dans ledit tronçon de condensation et au moins en partie basse dudit tronçon de perte de charge. Or l'inventeur a déterminé que les produits de valorisation à l'état gazeux formés du fait du craquage et guidés dans ledit tronçon de condensation présentent une masse volumique inférieure à la masse volumique de ladite huile de condensation vaporisée et sont nécessairement déplacés pour s'accumuler et stagner au-dessus d'un milieu dynamique résultant de la condensation de ladite huile de condensation. La perte de charge engendrée par ledit tronçon de perte de charge renforce cette stagnation et cette accumulation des produits de valorisation à l'état gazeux dans l'organe poreux -notamment dans le maillage métallique dense- dudit tronçon de perte de charge, et en particulier dans sa partie haute. Cette stagnation et cette accumulation forment en dynamique un obstacle de nature à maintenir une différence de pression entre la partie supérieure de l'organe tubulaire et ledit tronçon de condensation, dans lequel se poursuit la phase dynamique de condensation de ladite huile de condensation qui permet de maintenir l'atmosphère gazeuse dudit réacteur de craquage en dépression.

Sous l'effet de cette pression dynamique, les produits de valorisation à l'état gazeux forment au contact inférieur dudit organe poreux et dudit maillage métallique, une zone de pression maximale de laquelle ils sont extraits par l'organisation d'une dépression dans la partie supérieure dudit organe poreux et dans ledit tronçon de tirage thermique superposé.

La perte de charge, l'accumulation des produits de valorisation à l'état gazeux dans la zone de pression maximale constituent, sans interrompre totalement la circulation des produits de valorisation à l'état gazeux, un obstacle suffisant pour équivaloir, en dynamique, à une clôture dudit réacteur de nature à empêcher toute perturbation de la pression de craquage. Ainsi, sans perturbation du fonctionnement dudit réacteur de craquage, les produits de valorisation à l'état gazeux sont extraits de l'espace clos formé par ledit réacteur de craquage, par ledit tronçon de condensation et par ledit bouilleur vers ledit tronçon de tirage thermique.

Selon certains modes de réalisation, lors du craquage catalytique, ladite huile de condensation est chauffée à une température à peine supérieure à la température de vaporisation de ladite huile de condensation à ladite pression de craquage, dans ledit bouilleur disposé en partie inférieure de ladite pompe à vide thermochimique. Ainsi, ladite huile de condensation est chauffée de façon à atteindre sa température de vaporisation à ladite pression de craquage et être vaporisée, la température atteinte par ladite huile de condensation étant toutefois supérieure à sa température de vaporisation mais suffisamment proche de cette température de vaporisation pour permettre un refroidissement suffisant et suffisamment rapide de ladite huile de condensation dans ledit tronçon de condensation et dans ledit tronçon de perte de charge et sa condensation génératrice d'une dépression compensatrice de la surpression générée du fait de la production des produits de valorisation à l'état gazeux dans le réacteur de craquage.

Selon certains modes de réalisation, lors d'une étape préparatoire (préalable au) du craquage catalytique ;
- un bain de ladite huile de craquage est porté à ladite température de craquage dans le réacteur de craquage. Selon ces modes de réalisation, le bain de ladite huile de craquage étant exempt de matériau solide, de catalyseur et de composé alcalin, aucun craquage catalytique ne se produit dans ce bain lors de l'étape préparative préalable au craquage catalytique ;
- l'atmosphère gazeuse commune du réacteur de craquage et de ladite pompe à vide thermochimique est portée à une pression, dite pression d'initiation, inférieure à ladite pression de craquage -notamment inférieure à 10 hPa, de préférence comprise entre 1 et 5 hPa- par pompage de cette atmosphère gazeuse au moyen d'une pompe aspirante (pompe à vide) mécanique ;
- un bain de ladite huile de condensation est préchauffé dans ledit bouilleur s'étendant en partie inférieure de ladite pompe à vide thermochimique à une température inférieure et proche de la température de vaporisation de ladite huile de condensation à ladite pression d'initiation, puis ;
- le pompage mécanique de l'atmosphère gazeuse du réacteur de craquage et de ladite pompe à vide thermochimique à ladite pression d'initiation est interrompu - ladite pression d'initiation étant maintenue dans l'atmosphère gazeuse-, puis ;
- ladite huile de condensation est chauffée dans ledit bouilleur de ladite pompe à vide thermochimique à une température supérieure mais proche de la température de craquage et de vaporisation de ladite huile de condensation à ladite pression de craquage, ce par quoi des vapeurs chaudes de ladite huile de condensation montent dans ledit tronçon de condensation de ladite pompe à vide thermochimique -dans lequel la pression augmente à partir de ladite pression d'initiation et atteint ladite pression de craquage-,
- la température étant au niveau de ladite température de craquage et la pression étant parvenue à ladite pression de craquage, le procédé selon l'invention réunit les conditions pour que, selon la nature de ladite huile de condensation, les vapeurs de ladite huile de condensation condensent au contact dudit tronçon de condensation et dans ledit tronçon de perte de charge, ce par quoi, la température étant constamment maintenue au niveau de ladite température de craquage, il s'établit - conformément à la définition de ladite huile de condensation- un régime continu de vaporisation/condensation, maintenant l'atmosphère gazeuse du réacteur de craquage au niveau de ladite pression de craquage du fait de la continuité de la température au niveau de ladite température de craquage,
- puis lors d'une étape d'initiation du craquage catalytique, un débit de ladite dispersion de craquage et un débit d'huile de craquage recyclée chaude sont introduits et mélangés en un même point du le réacteur de craquage de façon à former un mélange à une température suffisante,
   o pour que ladite dispersion de craquage soit portée et maintenue à ladite température de craquage à ladite pression de craquage, ce par quoi la réaction de craquage est initiée et entretenue, des produits de valorisation à l'état gazeux sont produits dans l'atmosphère gazeuse à ladite pression de craquage, et
   o pour que ladite température de craquage soit maintenue dans le réacteur de craquage, et que soient notamment compensées l'enthalpie de vaporisation des produits de valorisation et les pertes thermiques par les parois du réacteur de craquage.

Selon l'invention, aucun moyen de pompage mécanique en continu - de maintien de l'atmosphère gazeuse du réacteur de craquage en dépression n'est nécessaire. Selon ces modes de réalisation, le chauffage de ladite huile de condensation dans ledit bouilleur est obtenu par tout moyen.

Selon certains modes de réalisation, les produits de valorisation à l'état gazeux produits du fait du craquage catalytique accumulés en partie basse dudit tronçon de perte de charge sont entrainés dans un tronçon, dit tronçon de tirage thermique, supérieur de l'organe tubulaire de ladite pompe à vide thermochimique puis dans un dispositif de condensation fractionnée, sous l'effet d'un tirage thermique induit par une introduction en partie haute de ladite pompe à vide thermochimique, d'un débit d'un carburant à l'état liquide -notamment d'un carburant liquide formé par condensation fractionnée de produits de valorisation formés du fait du craquage catalytique-, le carburant à l'état liquide étant vaporisé lors de sa progression dans ledit tronçon de tirage thermique en direction dudit tronçon de perte de charge,
le carburant ainsi vaporisé étant à une température inférieure à la température des produits de valorisation à l'état gazeux formés du fait du craquage catalytique ;
le débit de carburant vaporisé permet, du fait d'une différence des masses volumiques et des températures des courants ascendant et descendant, une ascension par tirage thermique, du débit des produits de valorisation à l'état gazeux vers le dispositif de condensation fractionnée, par tirage thermique -selon le principe par lequel la descente périphérique des gaz plus froids de masse volumique plus élevée que la masse volumique des gaz plus chauds axiaux emporte l'entrainement axial des gaz de masse volumique plus faible-. Selon ces modes de réalisation, les produits de valorisation à l'état gazeux produits du fait du craquage catalytique sont extraits dudit tronçon de perte de charge et entrainés en partie supérieure de ladite pompe à vide thermochimique en direction d'un dispositif de condensation fractionnée, du fait d'un tirage thermique créé dans ledit tronçon de tirage thermique par une introduction en partie haute dudit organe tubulaire d'un débit d'un carburant liquide -notamment d'un carburant liquide formé par craquage catalytique-.

Dans certains modes de réalisation, les produits de valorisation à l'état gazeux issus du craquage catalytique sont extraits dudit tronçon de perte de charge sous les effets procurés dans un tronçon, dit tronçon de tirage thermique, constituant la partie supérieure de l'organe tubulaire :
- d'une dépression créée dans un dispositif de condensation fractionnée du fait de la condensation de produits énergétiques -notamment d'alcanes- dans le dispositif de condensation fractionnée, et
- du tirage thermique.

Selon ces modes de réalisation, le carburant vaporisé lors de sa progression dans ledit tronçon de tirage thermique en direction dudit tronçon de perte de charge étant à une température inférieure à la température des produits gazeux formés du fait du craquage catalytique, et sa masse volumique étant supérieure à la masse volumique de ces mêmes produits gazeux, le débit de carburant vaporisé permet une progression du débit des produits de valorisation à l'état gazeux vers le dispositif de condensation, conformément au principe selon lequel la descente périphérique des produits gazeux plus froids et de masse volumique plus élevée que la masse volumique des produits gazeux plus chauds axiaux emporte l'entrainement axial vers le haut des produits gazeux de masse volumique la plus faible.

Selon ces modes de réalisation, le débit descendant de carburant est chauffé et vaporisé au contact du débit ascendant des produits de valorisation à l'état gazeux produits du fait du craquage catalytique et recyclé dans ladite pompe à vide thermochimique et/ou dans le dispositif de condensation fractionnée. L'inventeur a déterminé que, sous condition d'une hauteur suffisante dudit tronçon de tirage thermique, un tirage thermique suffisant est obtenu par une introduction d'une quantité de carburant correspondant à de l'ordre de 15% à 20 % du carburant produit et réintroduit à sa température de sortie de la distillation.

Selon certains modes de réalisation, ladite dispersion de craquage est chauffée dans le réacteur de craquage par mélange d'un débit de ladite dispersion de craquage et d'un débit de ladite huile de craquage -notamment d'un débit de ladite huile de craquage recyclée- préalablement chauffée à une température supérieure à ladite température de craquage à ladite pression de craquage de chaque composé hydrocarboné du matériau solide à l'état morcelé, le mélange étant réalisé de façon que ladite dispersion de craquage atteigne ladite température de craquage (comprise entre 260°C et 280°C) à ladite pression de craquage sans formation de coke, de dioxines et/ou de furannes -du fait du recours à un chauffage de ladite dispersion de craquage par mélange avec un débit de ladite huile de craquage à une température (par exemple comprise entre 310°C et 320°C) inférieure à la température (360°C en présence de coke déjà formé) de craquage thermique dudit matériau solide. Selon ces modes de réalisation, ladite dispersion de craquage est chauffée de façon à atteindre ladite température de craquage -notamment ladite température de craquage à ladite pression de craquage- par mélange d'un débit de ladite dispersion de craquage à une température inférieure à ladite température de craquage de chaque composé hydrocarboné de ladite dispersion de craquage et d'un débit de ladite huile de craquage chauffée préalablement au mélange à une température supérieure à ladite température de craquage d'au moins un -notamment de chaque- composé hydrocarboné de ladite dispersion de craquage et de façon que le mélange formé atteigne et dépasse ladite température de craquage d'au moins un -notamment de chaque- composé hydrocarboné de ladite dispersion de craquage. Selon ce mode de réalisation, préalablement au mélange, le débit de ladite dispersion de craquage est à une température inférieure à ladite température de craquage de chaque composé hydrocarboné de ladite dispersion de craquage et est aussi à une température inférieure à la température de formation de coke, de dioxines et/ou de furannes. Ladite huile de craquage, chauffée préalablement au mélange à une température supérieure à ladite température de craquage d'au moins un -notamment de chaque- composé hydrocarboné, est exempte de catalyseur, de composé alcalin et de composé hydrocarboné, et ne permet pas la formation de coke, de dioxines et/ou de furannes. Dans ce mode de réalisation, ladite dispersion de craquage atteint ladite température de craquage sans aucune mise en contact de ladite dispersion de craquage avec une paroi d'un échangeur de chaleur portée à une température nécessairement supérieure à la température de formation de coke, de dioxines et/ou de furannes (360°C à 400°C) pour que ladite dispersion de craquage atteigne à cœur ladite température de craquage à ladite pression de craquage.

Dans certains modes possibles de réalisation, on maintient ladite dispersion de craquage à ladite température de craquage à ladite pression de craquage par un apport dans ladite dispersion de craquage d'un débit d'une composition oxygénée comprenant du dioxygène (O₂) gazeux apte à provoquer une réaction exothermique de combustion de dihydrogène (H₂) gazeux formé du fait du craquage catalytique, par du dioxygène (O₂) gazeux de ladite dispersion de craquage.

Dans certains modes de réalisation, on porte ladite dispersion de craquage et/ou on maintient ladite dispersion de craquage à ladite températures de craquage d'au moins un -notamment de chaque- composé hydrocarboné de ladite dispersion de craquage par introduction dans ladite dispersion de craquage, préalablement au craquage ou en cours de craquage, d'un débit contrôlé d'une composition oxygénée à titre de comburant et adaptée pour pouvoir réagir sans inflammation, par combustion exothermique contrôlée de dihydrogène (H₂) gazeux formé dans ladite dispersion de craquage du fait du craquage catalytique. Avantageusement, cette combustion exothermique permet une compensation *in situ* de l'enthalpie de vaporisation des produits de valorisation - notamment des carburants- formés du fait du craquage, la poursuite du craquage et de la vaporisation des produits de valorisation formés, sans formation de coke, de dioxines et/ou de furannes.

Dans certains modes de réalisation, on ajoute le débit de composition oxygénée dans ladite dispersion de craquage avant que ladite dispersion de craquage n'atteigne ladite température de craquage. Le fait qu'une quantité contrôlée de dioxygène (O₂) gazeux soit présente dans ladite dispersion de craquage oxygénée avant que celle-ci atteigne ladite température de craquage, c'est-à-dire que du dioxygène (O₂) gazeux soit réparti dans ladite dispersion de craquage oxygénée avant craquage, permet lorsque ladite dispersion de craquage oxygénée atteint ladite température de craquage catalytique et que du dihydrogène (H₂) gazeux naissant est produit, que dès l'instant de sa formation, ce dihydrogène (H₂) gazeux naissant participe avec le dioxygène (O₂) gazeux à une réaction exothermique de combustion du dihydrogène (H₂) gazeux qui est parfaitement contrôlée du fait du contrôle du débit de la composition oxygénée.

La réaction exothermique de combustion contrôlée du dihydrogène (H₂) gazeux permet de compenser au moins en partie l'enthalpie de vaporisation endothermique des produits de valorisation et de maintenir la température de ladite dispersion de craquage oxygénée à une température permettant la poursuite du craquage catalytique et l'entrée des produits de valorisation à l'état gazeux dans la phase de distillation.

Selon certains modes de réalisation, on réalise une telle introduction en phase initiale de craquage de façon à permettre une production endogène d'énergie thermique permettant d'élever la température de ladite dispersion de craquage de façon qu'elle atteigne ladite température de craquage de chaque composé hydrocarboné de ladite dispersion de craquage à la pression de craquage.

Selon certains modes de réalisation, on réalise une telle introduction en phase terminale de craquage de façon à permettre une production endogène d'énergie thermique permettant de favoriser le maintien à l'état gazeux des hydrocarbures formés lors de la réaction de craquage par compensation de l'enthalpie de vaporisation des hydrocarbures formés.

Selon certains modes de réalisation, ladite dispersion de craquage est soumise à un traitement par des ultrasons lors du craquage catalytique. Un tel traitement par des ultrasons permet par une action mécanique vibratoire des ultrasons une répartition aussi homogène que possible des espèces réactives et catalytiques lors du craquage.

Selon certains modes de réalisation, on réalise une condensation d'au moins un produit de valorisation à l'état gazeux formé du fait du craquage catalytique, dans des conditions propres à former un carburant à l'état liquide. Selon certains modes de réalisation, on réalise une condensation fractionnée des produits de valorisation à l'état gazeux dans des conditions propres à fractionner les produits de valorisation et à former des produits de valorisation -notamment les carburants- séparés les uns des autres. On réalise cette séparation par condensation fractionnée par tout moyen connu, par exemple au moyen d'un dispositif de distillation fractionnée. On réalise une telle séparation par condensation fractionnée à pression atmosphérique.

Selon certains modes de réalisation, on réalise au moins l'une des étapes suivantes :
- une étape de séparation des produits de valorisation et de l'eau (qui n'est pas considérée comme un produit de valorisation formée du fait du craquage catalytique d'un composé hydrocarboné, mais qui peut être formée par combustion de dihydrogène formé lors du craquage et d'oxygène apporté par un matériau solide insuffisamment désoxygéné) par condensation d'un condensat formé des produits de valorisation, au moyen d'un condenseur refroidi à l'eau,
- une étape de distillation à pression atmosphériques du condensat dans des conditions adaptées pour séparer les différents carburants, notamment le gazole, le kérosène et l'essence,
- une étape d'élimination de l'eau par distillation,
- une étape de séparation par osmose du dioxyde de carbone et du dihydrogène.

Dans certains modes de réalisation, on collecte une phase gazeuse non condensée lors de la séparation par condensation fractionnée des produits de valorisation gazeux en produits de valorisation liquides, la phase gazeuse non condensée pouvant comprendre notamment des hydrocarbures saturés à chaine courte et/ou du dihydrogène (H₂) gazeux excédentaire à l'issue du craquage et/ou du dioxyde de carbone (CO₂), et on soumet la phase gazeuse non condensable à au moins une étape de séparation/purification par osmose, du dihydrogène (H₂) gazeux, des hydrocarbures saturés à chaine courte et du dioxyde de carbone (CO₂). Dans ces modes de réalisation, on sépare par osmose, le dioxyde de carbone des autres gaz résiduels de ladite condensation, ou par tout autre moyen. Du dioxyde de carbone est extrait de produits gazeux résiduels de ladite condensation, par osmose ou tout autre moyen adapté.

L'invention concerne également un dispositif de craquage catalytique à basse température d'un matériau solide à l'état morcelé, sans formation de coke, de dioxines et/ou de furannes, tel que décrit dans la revendication 13.

L'invention concerne en particulier un dispositif de craquage catalytique adapté pour pouvoir être utilisé pour mettre en œuvre un procédé selon l'invention.

Selon l'invention, le dispositif de craquage catalytique selon l'invention comprend un dispositif, dit condenseur primaire ou pompe à vide thermochimique, en communication d'échange gazeux avec l'atmosphère gazeuse dudit réacteur de craquage, ladite pompe à vide thermochimique étant adapté pour permettre un changement d'état d'une deuxième huile inerte, dite huile de condensation -dont la température de condensation est supérieure à la température de condensation de chaque produit de valorisation formé du fait du craquage catalytique-, de l'état gazeux expansé à l'état liquide condensé, ladite huile de condensation étant chauffée à une température supérieure à sa température de vaporisation à ladite pression de craquage, et pour maintenir l'atmosphère gazeuse du réacteur de craquage à ladite pression de craquage du fait d'une dépression créée du fait de ce changement d'état.

Selon ces modes de réalisation, ladite pompe à vide thermochimique présente un organe tubulaire orienté sensiblement verticalement, dont un tronçon, dit tronçon de condensation, est en communication d'échange gazeux avec l'atmosphère gazeuse dudit réacteur de craquage. Ladite pompe à vide thermochimique étant adaptée pour permettre un changement d'état d'une deuxième huile inerte, dite huile de condensation, de l'état gazeux expansé à l'état liquide condensé, ladite huile de condensation étant choisie pour présenter une température de condensation, supérieure à la température de condensation de chaque produit de valorisation formé du fait du craquage catalytique, et égale à la température de craquage lorsque la pression est au niveau de la pression de craquage. Ledit bouilleur s'étendant à la base et communiquant avec ledit tronçon de condensation est adapté pour chauffer ladite huile de condensation à une température supérieure à sa température de vaporisation. La pression dans ledit bouilleur ayant été préalablement abaissée, notamment avec des moyens mécaniques de mise sous vide, à un niveau inférieur à la pression de craquage, la pression monte sous l'effet du chauffage et de la vaporisation de ladite huile de condensation à une température supérieure à sa température de vaporisation à ladite pression de craquage. Lorsque la pression dans ledit tronçon de condensation, en communication avec ledit réacteur, atteint ladite pression de craquage, une légère baisse de la température entraine, par définition la condensation de la vapeur de ladite huile de condensation : la pression est stabilisée au niveau de la pression de craquage, la température réglable, étant constante, toute fluctuation en plus ou en moins de la pression entrainera une modification en sens contraire du débit de la condensation.

Ladite pompe à vide thermochimique est adaptée pour maintenir la pression de l'atmosphère gazeuse dudit réacteur de craquage au niveau de ladite pression de craquage au moyen d'une dépression créée par la condensation de ladite huile de condensation, préalablement vaporisée par chauffage à ladite pression de craquage et à un niveau de température un peu supérieur au niveau de sa température de changement d'état à ladite pression de craquage, la pression dans ledit tronçon de condensation de ladite pompe à vide thermochimique et dans l'atmosphère gazeuse dudit réacteur ayant été préalablement abaissée, avec des moyens mécaniques, sous le niveau de la pression de craquage.

Selon certains modes de réalisation, ladite pompe à vide thermochimique comprend :
- un organe, dit bouilleur, de chauffage de ladite huile de condensation adapté pour chauffer ladite huile de condensation à ladite température de vaporisation , et ;
- un organe tubulaire d'acheminement des produits de valorisation à l'état gazeux formés dans le réacteur de craquage du fait du craquage, vers un dispositif de distillation, l'organe tubulaire surmontant l'organe de chauffage et débouchant dans l'organe de chauffage et formant :
   o un tronçon, dit tronçon de condensation, inférieur en communication de fluide gazeux avec l'atmosphère gazeuse du réacteur de craquage et adapté pour pouvoir recevoir le débit de ladite huile de condensation à l'état gazeux, pour abaisser sa température à une température inférieure à la température de vaporisation de ladite huile de condensation à ladite pression de craquage et permettre une condensation du débit de ladite huile de condensation de l'état gazeux expansé à l'état liquide condensé, et pour maintenir la pression de l'atmosphère gazeuse du réacteur de craquage à ladite pression de craquage ;
   o un tronçon, dit tronçon de perte de charge, intermédiaire surmontant ledit tronçon de condensation, muni d'un organe poreux comprenant un maillage métallique, adapté pour compléter le changement d'état de ladite huile de condensation, de l'état gazeux expansé à l'état liquide condensé ;
ledit tronçon de condensation étant monté en communication d'échange gazeux avec ledit tronçon de perte de charge et avec l'atmosphère gazeuse commune du réacteur de craquage et de ladite pompe à vide thermochimique.

Selon ces modes de réalisation, ledit tronçon de condensation s'étend continument vers le bas à partir de l'organe de chauffage et vers le haut jusqu'audit tronçon de perte de charge et ledit tronçon de perte de charge s'étend continument vers le bas à partir dudit tronçon de perte de charge et vers le haut jusqu'à un tronçon, dit tronçon de tirage thermique, d'entrainement des produits de valorisation à partir dudit tronçon de perte de charge vers un dispositif de condensation fractionnée.

Ledit tronçon de condensation adapté pour pouvoir recevoir le débit de ladite huile de condensation à l'état gazeux, pour abaisser la température de ladite huile de condensation à l'état gazeux à une température inférieure à la température de vaporisation de ladite huile de condensation à ladite pression de craquage, pour permettre une condensation du débit de ladite huile de condensation de l'état gazeux expansé à l'état liquide condensé, et pour maintenir la pression de l'atmosphère gazeuse du réacteur de craquage à ladite pression de craquage.

Ledit tronçon de perte de charge est adapté pour créer, en dynamique, un obstacle à la circulation des produits de valorisation à l'état gazeux, sans cependant empêcher cette circulation, mais suffisant pour maintenir des états de pression différents entre le bas et le haut de l'organe tubulaire.

Selon certains modes de réalisation, l'organe tubulaire forme un tronçon, dit tronçon de tirage thermique, supérieur s'étendant vers le bas à partir dudit tronçon de perte de charge et adapté pour entrainer les produits de valorisation à l'état gazeux vers le dispositif de condensation fractionnée ;
ledit tronçon de tirage thermique étant muni en partie supérieure d'une entrée -notamment d'une entrée périphérique- d'un débit de produits de valorisation à l'état liquide dans ledit tronçon de tirage thermique, permettant une progression -notamment une montée- des produits de valorisation à l'état gazeux vers le dispositif de condensation fractionnée par renforcement du tirage thermique dans l'organe tubulaire et une entrée de ces produits de valorisation dans le dispositif de condensation fractionnée.

Dans ces modes de réalisation, la vaporisation de produits de valorisation à l'état liquide forme un courant descendant de vapeur induisant une montée des produits de valorisation du craquage à l'état gazeux par renforcement d'un tirage thermique dans l'organe tubulaire sous l'effet cumulé de la différence des masses volumiques des gaz en présence et d'une dépression formée dans le dispositif de condensation fractionnée contigu du fait de cette condensation.

Selon certains modes de réalisation, le dispositif de condensation fractionnée est un dispositif de distillation/condensation d'au moins un produit de valorisation à l'état gazeux et de sa conversion en carburant liquide.

Selon certains modes de réalisation, le réacteur de craquage présente une face interne en contact avec ladite dispersion de craquage à ladite température de craquage, la face interne du réacteur de craquage étant revêtue d'une couche de céramique adaptée pour s'opposer à la formation de coke au contact du fer et/ou de nickel constitutifs de la paroi du réacteur de craquage.

Selon certains modes de réalisation, le dispositif selon l'invention comprend d'un seul tenant, au moins deux des éléments nécessaires pour :
- préparer, chauffer et acheminer un débit de ladite dispersion de craquage dans le réacteur de craquage ;
- préparer -notamment recycler, recueillir par débordement dudit réacteur de craquage-, chauffer à une température supérieure à ladite température de craquage de chaque composé hydrocarboné et inférieure au seuil de 360°C de la décomposition thermique et de la formation potentielle de coke et acheminer un débit de ladite huile de craquage dans le réacteur de craquage ;

- mélanger dans le réacteur de craquage à ladite pression de craquage, le débit de ladite dispersion de craquage et le débit de ladite huile de craquage chaude, ce par quoi la réaction de craquage catalytique se produit sans formation de coke ;
- placer ladite dispersion de craquage au contact de l'atmosphère gazeuse s'étendant dans le réacteur de craquage à ladite pression de craquage, inférieure à la pression atmosphérique ;
- condenser les produits de valorisation à l'état gazeux formés du fait du craquage catalytique et produire le(s) carburant(s) à l'état liquide ;
- recycler ladite huile de craquage à l'issue du craquage catalytique ;
- collecter le catalyseur à l'issue du craquage en vue de son recyclage,
- organiser l'apport et le maintien en suspension du catalyseur dans le réacteur ; et
- collecter une fraction résiduelle du catalyseur à l'issue du craquage en vue de son recyclage.

L'invention concerne également un procédé et un dispositif de craquage catalytique d'un matériau solide hydrocarboné caractérisés, en combinaison ou non, par tout ou partie des caractéristiques mentionnées ci-dessus ou ci-après. Quelle que soit la présentation formelle qui en est donnée, sauf indication contraire explicite, les différentes caractéristiques mentionnées ci-dessus ou ci-après ne doivent pas être considérées comme étroitement ou inextricablement liées entre elles, l'invention pouvant concerner l'une seulement de ces caractéristiques structurelles ou fonctionnelles, ou une partie seulement de ces caractéristiques structurelles ou fonctionnelles, ou une partie seulement de l'une de ces caractéristiques structurelles ou fonctionnelles, ou encore tout groupement, combinaison ou juxtaposition de tout ou partie de ces caractéristiques structurelles ou fonctionnelles.

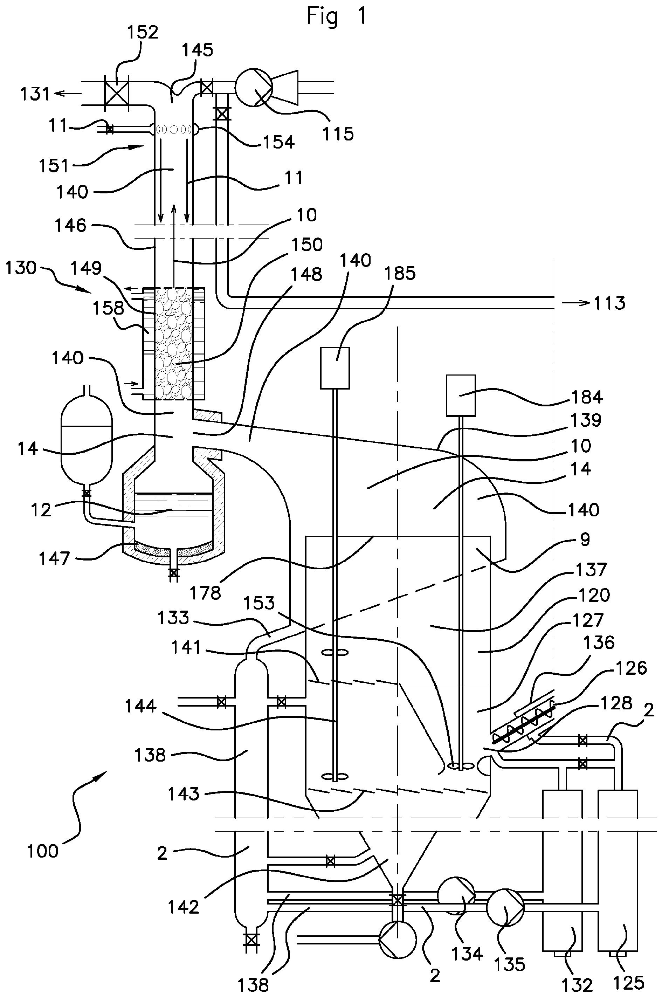

D'autres buts, caractéristiques et avantages de l'invention apparaîtront à la lecture de la description suivante donnée à titre non limitatif de certains de ses modes de réalisation possibles et qui se réfère aux figures annexées, dans lesquelles les figure 1 et fi-gure 2 forment une représentation en deux parties juxtaposées d'un dispositif de craquage selon un mode particulier de réalisation de l'invention, dont :
[Fig. 1] est un schéma représentatif d'un mode de réalisation particulier d'un dispositif 100 de craquage selon l'invention ;
[Fig. 2] est un schéma complémentaire de la figure 1, représentatif d'un mode de réalisation particulier d'un procédé et d'une unité 110 de préparation d'une dispersion de craquage préalable à son introduction dans le dispositif 100 de craquage représenté en figure 1, et ;
[Fig. 3] est un schéma synoptique d'un mode de réalisation particulier de réalisation d'un procédé de craquage catalytique selon l'invention.

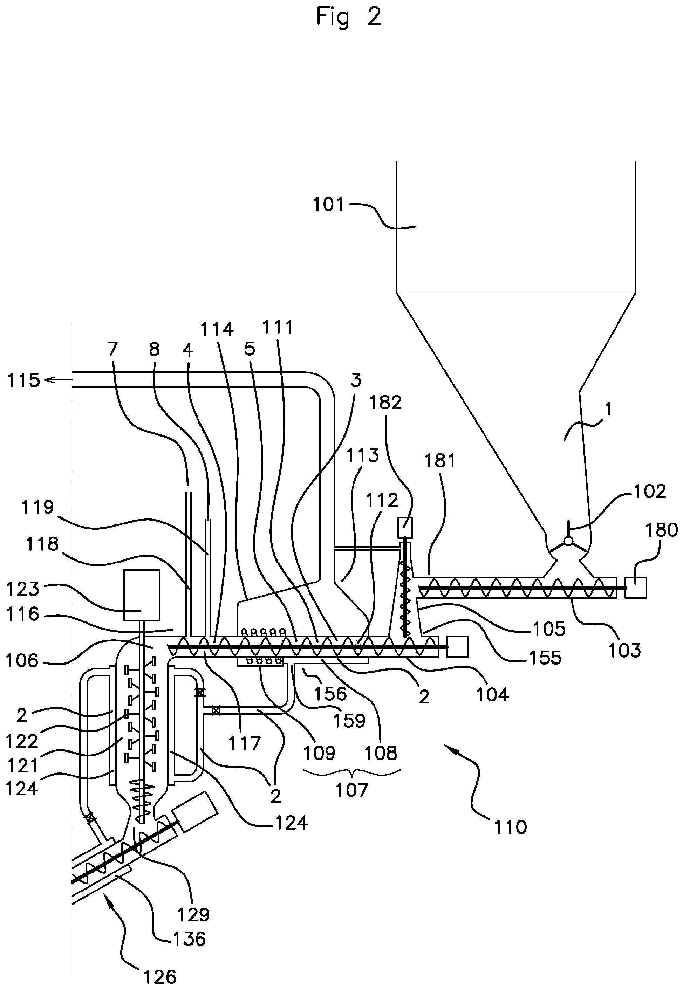

Sur les figures 1 et 2, les échelles et les proportions ne sont pas nécessairement strictement respectées uniquement à des fins de clarté de l'illustration. Dans tout le texte, les termes « amont » et « aval » sont définis par rapport au sens d'écoulement d'un matériau, dit matériau 1 hydrocarboné, solide à l'état morcelé et comprenant au moins un composé hydrocarboné et/ou de ladite dispersion 3 hydrocarbonée et/ou de ladite dispersion 4 séchée et/ou de ladite dispersion 5 dégazée et/ou de ladite dispersion 6 de craquage entre une trémie 101 de stockage amont et d'approvisionnement du dispositif 100 de craquage et un réacteur 120 de craquage et par rapport au sens d'écoulement des produits 10 de valorisation formés du fait du craquage catalytique entre l'atmosphère gazeuse du réacteur 120 de craquage à une pression inférieure à la pression atmosphérique, vers une pompe à vide 130 thermochimique ou condenseur 130 primaire de maintien de l'atmosphère gazeuse du réacteur 120 de craquage en dépression, et vers un dispositif 131 de condensation fractionnée des produits 10 de valorisation formés et de production de carburant 11. Les termes « inférieur », « supérieur », « haut » et « bas » s'entendent par rapport au dispositif de craquage en état de fonctionnement, c'est-à-dire dans lequel le bain de ladite huile de craquage remplit le fond du réacteur de craquage en partie basse du dispositif et que l'organe de collecte des vapeurs formées lors du craquage s'étend en partie supérieure du dispositif.

Une représentation schématique d'un mode de réalisation particulier d'un dispositif 100 de craquage dudit matériau 1 hydrocarboné -notamment d'un déchet- selon l'invention est représenté en figure 1. Le dispositif 100 de craquage comprend à son extrémité amont, une unité 110 de préparation d'un débit d'une dispersion 3 hydrocarbonée dudit matériau 1 hydrocarboné dans une première huile, dite huile 2 de craquage, inerte vis-à-vis du craquage catalytique. L'unité 110 de préparation comprend par exemple une trémie 101 de stockage dudit matériau 1 hydrocarboné à l'état morcelé et d'approvisionnement du dispositif 100 de craquage avec dudit matériau 1 hydrocarboné. Selon certains modes de réalisation avantageux, dudit matériau 1 hydrocarboné est sous forme de fragments solides présentant une plus grande dimension inférieure à de l'ordre de 20 mm et au moins une dimension inférieure ou égale à 3 mm, notamment de l'ordre de 2 mm. De préférence, dudit matériau 1 hydrocarboné est sous forme de particules solides présentant une surface spécifique inférieure ou égale à 10 cm2 et une épaisseur inférieure ou égale à 3 mm, notamment de préférence inférieure à 2 mm. Bien entendu, rien n'empêche de prévoir des moyens de fragmentation dudit matériau 1 hydrocarboné. On réalise une telle fragmentation du matériau 1 hydrocarboné par tout procédé approprié, notamment par extrusion dudit matériau 1 hydrocarboné dans un extrudeur -par exemple, un extrudeur simple vis ou un extrudeur bi-vis-ou par lacération du matériau 1 hydrocarboné de façon à former un matériau 1 hydrocarboné morcelé.

Ledit matériau 1 hydrocarboné est choisi pour comprendre au moins un composé hydrocarboné, c'est-à-dire au moins un composé formé majoritairement d'atomes de carbone et d'atomes d'hydrogène. Il peut s'agir d'un matériau formé exclusivement de composés hydrocarbonés. Il peut aussi s'agir d'un matériau comprenant au moins un composé hydrocarboné et au moins un composé exempt de carbone et d'hydrogène. Un tel matériau hydrocarboné peut comprendre au moins un composé hydrocarboné présentant au moins un hétéroatome tel que, par exemple, l'oxygène (O), l'azote (N), le phosphore (P), le soufre (S), au moins un halogène (Cℓ, Br, F, I), etc. Ledit matériau 1 hydrocarboné peut être un matériau comprenant un composé hydrocarboné issu de la biomasse. Ledit matériau 1 hydrocarboné peut être un déchet, c'est-à-dire une partie non utilisée d'une matière, cette partie non utilisée nécessitant une élimination par incinération et/ou un retraitement approprié en vue de son stockage. Il peut s'agir par exemple d'un déchet industriel, d'un déchet agricole -telles que des parties non valorisées de plantes- ou de déchets ménagers obtenus après un tri mécanique destiné à écarter les matières inertes -telles que le verre- ou non transformables. Il peut s'agir d'un déchet solide contenant au moins un composé hydrocarboné, notamment au moins un composé organique, de la matière cellulosique et/ou des matériaux synthétiques polymériques. Un tel déchet peut être sensiblement exempt de matière putrescible. Cependant, s'agissant d'un déchet ménager, un tel déchet peut comprendre des matières putrescibles. Un tel déchet peut être formé par un traitement par compression d'ordures ménagères dans une presse adaptée pour pouvoir séparer les matières putrescibles et les matières combustibles de ces ordures ménagères. Une telle séparation peut être par exemple réalisée au moyen d'une presse à extruder, par exemple telle que décrite dans EP 0 563 173. En général, un tel déchet solide à l'état brut, morcelé peut présenter un taux d'humidité compris entre 10% à 30%. Par exemple, on soumet des ordures ménagères à une compression jusqu'à une pression supérieure à 750 bars dans des conditions propres à extraire l'eau et une fraction fermentescible sous forme de pulpe humide et à former le matériau -notamment le déchet- solide hydrocarboné.

La trémie 101 de stockage du matériau 1 solide à l'état morcelé et comprenant au moins un composé hydrocarboné et d'approvisionnement du dispositif 100 de craquage avec ce matériau 1 solide est munie d'au moins un organe 102 de contrôle du débit dudit matériau 1 hydrocarboné délivré par la trémie 101 dans un convoyeur 103 de transfert du matériau 1 solide morcelé dans un convoyeur 104 de séchage et de désoxygénation du matériau 1 solide. L'organe 102 de contrôle permet d'ajuster le débit de matériau 1 solide morcelé introduit dans le dispositif 100 de craquage de façon à pouvoir contrôler la réaction de craquage catalytique dans un réacteur 120 aval de craquage et éviter toute obstruction des conduits d'approvisionnement de ce réacteur 120 de craquage en réactifs de craquage catalytique. Le convoyeur 103 de transfert peut être de tout type et de toute longueur dès lors qu'il permet un acheminement sûr et régulier du matériau 1 solide morcelé et son introduction dans le convoyeur 104 de séchage. Le convoyeur 103 de transfert peut être un convoyeur à vis sans fin entrainée en rotation par un moteur 180 -notamment un moteur électrique- connu en lui-même.

Dans certains modes de réalisation non représentés, l'organe de contrôle et d'ajustement du débit de matériau 1 solide morcelé introduit dans le dispositif de craquage comprend un dispositif doseur d'introduction contrôlée dudit matériau hydrocarboné à l'état morcelé dans le convoyeur de séchage/désoxygénation et adapté pour maintenir le volume interne du convoyeur de séchage/désoxygénation et l'organe de dégazage en dépression lors de l'actionnement du dispositif doseur.

Le convoyeur 104 de séchage/désoxygénation représenté en figure 1 comprend dans sa partie 155 amont un convoyeur 105 tronconique d'axe sensiblement vertical et évasé vers le bas, permettant un guidage et un acheminement du matériau 1 solide morcelé, assistés par la gravité, le conduit 105 tronconique s'étendant et faisant jonction entre l'extrémité avale du convoyeur 103 de transfert et débouchant en partie 155 amont du convoyeur 104 de séchage/désoxygénation. Le convoyeur 105 tronconique est équipé d'une vis rotative entrainée en rotation par un moteur 182, la vis rotative coopérant avec le conduit 105 tronconique pour permettre la chute par gravité du débit de matériau 1 solide morcelé dans la partie 155 amont du convoyeur 104 de séchage/désoxygénation.

Le convoyeur 104 de séchage/désoxygénation est du type comprenant une vis sans fin entrainée en rotation par un moteur 183 selon un axe longitudinal sensiblement horizontal. Le convoyeur 104 de séchage/désoxygénation est muni de moyens 107 de chauffage du matériau 1 solide morcelé à une température maximale de 180°C et minimale de 102°C -notamment à une température comprise entre 102°C et 130°C-. Les moyens 107 de chauffage permettent une vaporisation et une extraction d'eau 14 sous forme vapeur lors du transport du matériau 1 solide à l'état morcelé dans une partie 156 intermédiaire du convoyeur 104 de séchage/désoxygénation. Ce séchage permet de faciliter la dispersion du matériau 1 solide morcelé dans ladite huile 2 de craquage en garantissant l'absence d'eau libre. Les moyens 107 de chauffage du convoyeur 104 de séchage/désoxygénation comprennent aussi une gaine 108 externe de chauffage par conduction du convoyeur 104 de séchage/désoxygénation adaptée pour recevoir un débit de ladite huile 2 de craquage chaude -notamment par un débit de ladite huile 2 de craquage recyclée et chauffée à l'issue et du fait du craquage catalytique-. La gaine 108 externe s'étend en regard de la partie 156 intermédiaire du convoyeur 104 de séchage/désoxygénation et permet un échange thermique entre ladite huile 2 de craquage chaude circulant dans la gaine 108 externe et la dispersion 3 hydrocarbonée circulant dans le convoyeur 104 de séchage/désoxygénation et un chauffage de la dispersion 3 hydrocarbonée.

Le débit de ladite huile 2 chaude de craquage peut être à une température comprise entre 150°C et 200°C -notamment de l'ordre de 180°C à 190°C- en entrée 159 de la gaine 108 externe. La gaine 108 externe de chauffage débouche dans l'espace 111 interne du convoyeur 104 de séchage/désoxygénation par des orifices 112 de communication de ladite huile de craquage, les orifices 112 étant formés dans la paroi externe du convoyeur 104, ce par quoi de ladite huile 2 chaude de craquage est mise en contact avec le matériau 1 solide morcelé pour former une dispersion, dite dispersion 3 hydrocarbonée, de ce matériau 1 solide dispersé dans ladite huile 2 de craquage chaude.

Rien n'empêche de prévoir que la gaine 108 externe de chauffage soit munie de moyens 109 supplémentaires de chauffage par induction d'une dispersion 5 dégazée, adaptés et contrôlés pour porter la dispersion 5 dégazée et le matériau 1 solide de la dispersion 5 dégazée à une température sensiblement supérieure à 100°C -notamment à une température comprise entre 100°C et 280°C- assurant d'une quasi-absence d'eau résiduelle dans la dispersion 5 dégazée et dans le matériau sec dispersé dans ladite huile 2 de craquage chaude.

Dans certains modes de réalisation, on réalise une étape 175 préalable de séchage de façon que ne subsiste dans le matériau 1 solide morcelé sensiblement uniquement l'eau de constitution du matériau solide morcelé, c'est-à-dire l'eau constitutive et non extractible du matériau solide morcelé.

Rien n'empêche de prévoir de réaliser une étape 175 additionnelle d'ajustement de la granulométrie du matériau 1 solide morcelé de départ et/ou du matériau 1 solide morcelé dans la dispersion 3 hydrocarbonée et/ou du matériau 1 solide morcelé dans la dispersion 4 séchée et/ou du matériau 1 solide morcelé dans la dispersion 5 dégazée et/ou du matériau 1 solide morcelé dans ladite dispersion 6 de craquage. On réalise un tel ajustement de la granulométrie par tout moyen de fragmentation approprié.

La partie 156 intermédiaire du convoyeur 104 de séchage/désoxygénation est munie d'un organe 113 de dégazage comprenant une cloche 114 maintenue en dépression - c'est-à-dire à une pression inférieure à la pression atmosphérique- par une pompe 115 aspirante mécanique. Le convoyeur 104 de séchage/désoxygénation permet la formation d'une dispersion 5 dégazée -notamment au moins partiellement désoxygénée- et asséchée du matériau 1 solide morcelé dans ladite huile 2 de craquage.

Selon certains modes de réalisation, on réalise cette désoxygénation en maintenant la dispersion du matériau 1 solide morcelé en contact avec une atmosphère gazeuse présentant une valeur de pression partielle en oxygène inférieure à la pression partielle en oxygène de l'air atmosphérique. Par exemple, on réalise une telle désoxygénation en maintenant la dispersion du matériau 1 solide à l'état morcelé dans ladite huile 2 de craquage en contact avec une atmosphère formée d'un gaz inerte. Rien n'empêche de réaliser une telle désoxygénation en maintenant la dispersion en contact avec de l'air atmosphérique à une pression inférieure à la pression atmosphérique.

Un tel dégazage et une telle désoxygénation 177 du matériau 1 solide morcelé séché et dispersé dans ladite huile 2 chaude de craquage permet de contrôler aussi précisément que possible une réaction de combustion exothermique de dihydrogène (H₂) à l'état gazeux produit lors du craquage par du dioxygène (O₂) gazeux présent dans ladite dispersion 6 de craquage. En effet, dans certains modes de réalisation d'un procédé selon l'invention de production de produits de valorisation -notamment de carburant- par craquage catalytique d'un matériau -notamment d'un déchet- solide contenant de la biomasse, c'est-à-dire un matériau constitué au moins en partie de matière d'origine végétale et/ou de matière d'origine animale et susceptible de former du dihydrogène (H₂) à l'état gazeux lors du craquage, il convient d'éviter que se déroule cette réaction de combustion exothermique non contrôlée, de façon à empêcher tout échauffement incontrôlé de ladite dispersion 6 de craquage. Selon d'autres modes de réalisation, il convient de pouvoir éviter la consommation de dihydrogène (H₂) à l'état gazeux produit lors du craquage, le dihydrogène (H₂) à l'état gazeux étant un produit de valorisation recherché dans ces modes de réalisation.

Une telle désoxygénation 177 permet de limiter à une valeur contrôlée, la quantité d'oxygène (O₂) moléculaire présent dans la dispersion du matériau 1 solide morcelé dans ladite huile 2 de craquage. Elle permet également de limiter en la contrôlant la combustion exothermique du dihydrogène (H2) au cours de la réaction de craquage catalytique, qui est susceptible de conduire :
- à une formation aléatoire de vapeur d'eau et à une augmentation incontrôlée de la température des vapeurs dégagées lors la réaction de craquage, une telle augmentation de la température des vapeurs étant de nature à s'opposer à la condensation des produits de valorisation -notamment du carburant-, et ;
- à une augmentation incontrôlée de la température de ladite dispersion de craquage dans ladite chambre de craquage, notamment jusqu'à une température de l'ordre de 600°C (observée lorsque l'étape de désoxygénation n'est pas réalisée), température qui est incompatible avec le déroulement d'une réaction de craquage sans formation de coke.

Le convoyeur 104 de séchage/désoxygénation présente une extrémité 116 avale de circulation de la dispersion 4 du matériau 1 solide séché et dégazé dans ladite huile 2 de craquage. Cette extrémité 116 avale du convoyeur 104 de séchage/désoxygénation forme un conduit 117 de préparation d'une dispersion 6 de craquage dans lequel débouchent un conduit 118 d'amenée d'un débit de catalyseur 7 de craquage et un conduit 119 d'amenée d'un débit de composé 8 alcalin dans le conduit 117 de préparation. L'extrémité 106 avale du conduit 117 de préparation débouche dans une chambre 121 de malaxage munie de moyens 122 de malaxage vigoureux du mélange formé et entrainés en rotation selon un axe de rotation vertical par un organe 123 moteur. Les moyens 122 de malaxage sont choisis pour favoriser les contacts entre les constituants de ladite dispersion 6 de craquage, c'est-à-dire entre ledit matériau 1 hydrocarboné, le catalyseur 7 de craquage, le composé 8 alcalin et ladite huile 2 de craquage. Rien n'empêche de prévoir que la chambre 121 de malaxage soit une chambre de malaxage de ladite dispersion 6 de craquage et de dilacération du matériau 1 solide.

Le(s) composé(s) 8 alcalin(s) est(sont) apportés en quantité(s) adaptée(s) pour que le pH de ladite dispersion 6 de craquage soit supérieur à 8,5, notamment compris entre 8 et 9. Une telle valeur de pH permet d'une part de favoriser -notamment de permettrela réaction de craquage catalytique. Elle permet également de limiter la corrosion des éléments du dispositif 100 de craquage, mis en contact avec ladite dispersion 6 de craquage. Elle permet aussi de réaliser un craquage catalytique de composés hydrocarbonés chlorés. Dans certains modes de réalisation d'un procédé selon l'invention, on utilise de la chaux, ou oxyde de calcium (CaO) à titre de composé 8 alcalin.

Ladite huile 2 de craquage est une huile inerte vis-à-vis du craquage catalytique, c'est-à-dire une huile qui ne subit pas de modification chimique lorsqu'elle est placée dans des conditions (catalyseur, température...) de craquage et de transformation de composés hydrocarbonés du matériau solide à l'état morcelé en produits de valorisation. Il peut s'agir d'une huile minérale inerte vis-à-vis du craquage catalytique et stable à ladite température de craquage. Ladite huile 2 de craquage est formée d'une huile minérale à l'état liquide à ladite température de craquage, à l'état liquide à température ambiante et à l'état liquide à la température de 0°C. Ladite huile 2 de craquage peut présenter une densité inférieure à la densité du catalyseur 7 de craquage et inférieure à la densité dudit matériau 1 hydrocarboné. Selon certains modes de réalisation, ladite huile 2 de craquage présente une densité de l'ordre de 0,85.

Ladite huile 2 de craquage peut être une huile inerte recyclée, par exemple à partir de la mousse 9 de craquage catalytique en expansion formée du fait du craquage de ladite dispersion 6 de craquage, par séparation liquide/solide de ladite huile 2 de craquage de la mousse 9 de craquage en expansion et des matières solides (catalyseur, résidus solides...). Cette séparation peut être réalisée par tout moyen. Elle peut être réalisée au moyen d'un dispositif de séparation liquide/solide par décantation de matières solides de haute densité. Il peut s'agir d'un dispositif de séparation liquide/solide par filtration et rétention des matières solides morcelées. Il peut s'agir d'un dispositif de séparation liquide/solide par flottation permettant une séparation de ladite huile 2 de craquage recyclée et de matières solides de densité supérieure à la densité de ladite huile 2 de craquage et de matières de densité inférieure à la densité de ladite huile 2 de craquage.

Au moins un catalyseur 7 de craquage est un catalyseur de craquage catalytique de composés hydrocarbonés en hydrocarbures. Au moins un catalyseur 7 de craquage est choisi dans le groupe formé des silicates de potassium, des silicates de sodium, des silicates de calcium, des silicates de magnésium, des silicates d'aluminium, des silicates de magnésium et d'aluminium, de la zéolithe et de la bentonite. D'autres catalyseurs de craquage sont utilisables. De tels catalyseurs sont en outre des catalyseurs peu onéreux. Au moins un catalyseur 7 de craquage est un solide à l'état divisé.

On adapte le débit du matériau 1 solide morcelé et contenant au moins un composé hydrocarboné, le débit du(des) catalyseur(s) 7 de craquage, le débit du(des) composé(s) 8 alcalin(s) -notamment de la chaux- et le débit de ladite huile 2 de craquage non usagée ou recyclée, de manière appropriée pour respecter leurs proportions dans ladite dispersion 6 de craquage.

Dans certains modes de réalisation, on réalise le mélange de façon que ladite dispersion 6 de craquage présente un rapport entre le volume de matériau 1 solide à l'état morcelé et le volume de ladite dispersion 6 de craquage qui soit compris entre de l'ordre de 20% et de l'ordre de 50%.

La chambre 121 de malaxage est équipée d'une gaine 124 externe de chauffage de ladite dispersion 6 de craquage en cours de malaxage dans la chambre 121 de malaxage, et dans laquelle est entrainé un débit de ladite huile 2 de craquage chaude chauffée par des premiers moyens 125 de chauffage de ladite huile 2 de craquage à une température inférieure à ladite température de craquage de chaque composé hydrocarboné de ladite dispersion 6 de craquage (à ladite pression de craquage) et inférieure à la température de formation de coke, de dioxines et/ou de furannes. Les premiers moyens 125 de chauffage de ladite huile 2 de craquage sont disposés en amont (selon la direction de circulation de ladite huile 2 de craquage) de la gaine 124 périphérique de façon que le débit de ladite huile 2 de craquage chaude chauffée par les premiers moyens 125 de chauffage s'écoule dans la gaine 124 périphérique puis dans la gaine 108 externe de chauffage du convoyeur 104 de séchage/désoxygénation et débouche dans l'espace 111 interne du convoyeur 104 de séchage/désoxygénation par les orifices 112 d'introduction du débit de ladite huile 2 de craquage chaude au contact du matériau 1 solide morcelé. Ainsi, le chauffage préalable du matériau 1 solide morcelé en vue de son séchage/désoxygénation et le chauffage de ladite dispersion 6 de craquage sont optimisés et les coûts nécessaires pour ces chauffages sont minimisés.

La dispersion 6 de craquage malaxée dans la chambre 121 de malaxage est entrainée en sortie 129 de la chambre 121 de malaxage et reprise par un convoyeur 126 à vis d'approvisionnement et d'introduction de ladite dispersion 6 de craquage dans une chambre 127 de mélange et d'initiation de la réaction du réacteur 120 de craquage. Le convoyeur 126 d'introduction de ladite dispersion 6 de craquage dans la chambre 127 de mélange débouche dans la chambre 127 de mélange en une zone 128 de convergence du débit de ladite dispersion 6 de craquage et d'un débit de ladite huile 2 de craquage préalablement chauffée à une température supérieure à ladite température de craquage d'au moins un composé hydrocarboné dudit matériau 1 hydrocarboné morcelé et de façon que le mélange atteigne, au moins en zone 128 de convergence une température supérieure à ladite température de craquage d'au moins un composé hydrocarboné. Le craquage s'initie. Le convoyeur 126 d'approvisionnement est muni d'une gaine 136 périphérique de circulation d'un débit de ladite huile 2 de craquage chauffée par les moyens 125,132 de chauffage, ce débit et la température de ladite huile 2 de craquage chaude étant ajustés pour permettre un chauffage de ladite dispersion 6 de craquage au plus près de ladite température de craquage d'au moins un composé hydrocarboné du matériau 1 solide morcelé, mais toutefois inférieure à cette température de craquage et inférieure à la température de formation de coke, de dioxines et/ou de furannes.

Le dispositif 100 de craquage comprend des deuxième moyens 132 de chauffage du débit de ladite huile 2 de craquage à une température supérieure à ladite température de craquage d'au moins un composé hydrocarboné dudit matériau 1 hydrocarboné morcelé, de façon que le mélange dans la zone 128 de mélange par convergence de ladite huile 2 de craquage chaude et de ladite dispersion 6 de craquage atteigne et dépasse ladite température de craquage d'au moins un -notamment de chaque- composé hydrocarboné de ladite dispersion 6 de craquage. Le débit de ladite huile 2 de craquage chaude est exempt de tout catalyseur 7 de craquage, exempt de tout matériau 1 hydrocarboné et de tout composé 8 alcalin, de sorte que son chauffage à une température supérieure à ladite température de craquage d'au moins un composé hydrocarboné et, le cas échéant, à une température supérieure à la température de formation de coke, de dioxines et/ou de furannes ne s'accompagne pas d'une formation de coke, de dioxines et/ou de furannes. Le débit de ladite huile 2 de craquage est chauffé à une température supérieure à ladite température de craquage d'au moins un composé hydrocarboné du matériau 1 solide morcelé par les deuxièmes moyens 132 de chauffage à partir d'un débit de ladite huile 2 de craquage prélevée en sortie 133 du réacteur 120 de craquage.

Chaque débit de ladite huile 2 de craquage dans les premiers et deuxièmes moyens 125,132 de chauffage est formé et contrôlé par des moyens 134,135 de pompage de ces débits de ladite huile 2 de craquage et la température de chacun de ces débits est ajustée selon l'utilisation envisagée de chaque débit de ladite huile 2 de craquage.

Ainsi, aux fins de son chauffage à une température supérieure à ladite température de craquage, on ne met pas ladite dispersion 6 de craquage en contact avec une surface chauffante d'un organe de chauffage par conduction et dont la température est nécessairement supérieure ou égale à la température de formation de coke, notamment supérieure ou égale à 360°C -notamment supérieure ou égale à 400°C- pour pouvoir chauffer ladite dispersion de craquage et qu'elle atteigne à cœur une température au moins égale à ladite température de craquage (qui peut être comprise entre 240°C et 300°C -notamment entre 260°C et 280°C- selon le matériau solide à l'état morcelé).

Dans tous les modes de réalisation d'un procédé selon l'invention, on atteint ladite température de craquage sans mettre ladite dispersion 6 de craquage en contact avec une surface chauffante d'un organe de chauffage par conduction, ladite surface chauffante étant nécessairement portée à une température supérieure à la température de formation de coke, de dioxines et/ou de furannes et entrainant la formation de coke, de dioxines et/ou de furannes.

Le mélange du débit de ladite dispersion 6 de craquage et du débit de ladite huile 2 chaude de craquage dans la zone 128 de convergence est réalisé de façon que ladite dispersion 6 de craquage atteigne, du fait de ce mélange dans la chambre 127 de mélange, une température supérieure à ladite température de craquage d'au moins un - notamment de chaque- composé hydrocarboné de ladite dispersion 6 de craquage. Ce par quoi le craquage d'au moins un composé hydrocarboné est initié dans la chambre 127 de mélange.

La chambre 127 de mélange est munie dans sa partie inférieure d'une turbine 153 de mélange et de formation d'un débit ascendant de ladite dispersion 6 de craquage portée à ladite température de craquage, ce débit ascendant étant alimenté à la base de la chambre 127 de mélange par le débit de ladite dispersion 6 de craquage et par le débit de ladite huile 2 de craquage chaude. La turbine 153 de mélange est entrainée en rotation par un axe et un moteur 184. Le débit ascendant de ladite dispersion 6 de craquage progresse dans la chambre 127 de mélange vers une chambre, dite chambre 137 de rendement, supérieure du réacteur 120 de craquage, en formant une mousse 9 en expansion comprenant une composition mixte solide/liquide et une phase gazeuse formée des produits 10 de valorisation résultant du craquage catalytique dispersée dans la composition mixte solide/liquide. La phase gazeuse comprend notamment des hydrocarbures à chaînes courtes et à l'état gazeux, du dihydrogène (H₂) gazeux naissant du fait craquage catalytique, du dioxyde de carbone (CO₂) gazeux et de la vapeur d'eau. L'initiation de la réaction de craquage catalytique conduit à une dissociation du(des) catalyseur(s) du fait du craquage et à une libération du(des) catalyseur(s) qui est(sont) instantanément susceptible(s) d'être engagé(s) dans la poursuite du craquage. La réaction de craquage se poursuit dans ladite chambre 137 de rendement. Le débit de ladite dispersion 6 de craquage en phase de finalisation du craquage, c'est-à-dire sensiblement exempte de matériau 1 solide morcelé et de catalyseur 7 de craquage séparé de ladite huile 2 de craquage du fait de sa masse volumique plus élevée que celle de ladite huile 2 de craquage, est entrainé par débordement en partie supérieure de ladite chambre 137 de rendement, formant une lèvre 178 de débordement. Le débit de ladite huile 2 de craquage récupéré par débordement est collecté en sortie 133 du réacteur 120 de craquage pour pouvoir être recyclé dans un circuit 138 de recyclage de ladite huile 2 de craquage. Le circuit 138 de recyclage comprend une colonne 160 de recyclage munie d'un conduit 161 d'approvisionnement du circuit 138 de recyclage en huile 2 de craquage communiquant avec un réservoir d'approvisionnement. Pareillement, le(s) catalyseur(s) 7 de craquage est(sont) collectés après sédimentation au fond 142 du réacteur 120 de craquage. Le(s) catalyseur(s) 7 de craquage peuvent aussi être redirigés vers la chambre 127 de mélange et/ou vers la chambre 137 de rendement et/ou vers la zone 128 de convergence du débit de ladite dispersion 6 de craquage et du débit de ladite huile 2 de craquage chaude au moyen de déflecteurs 141,143. Une telle redistribution du(des) catalyseur(s) est rendue possible par un dispositif 144 de brassage radial de ladite dispersion 6 de craquage en cours de craquage dans le réacteur 120 de craquage permettant d'augmenter le temps de contact des espèces réactives dans la chambre 127 de mélange et dans la chambre 137 de rendement. Le dispositif 144 de brassage radial est entrainé en rotation par un moteur 185.

À mesure de leur apparition dans ladite dispersion 6 de craquage portée à une température supérieure à ladite température de craquage d'au moins un -notamment de chaque- composé hydrocarboné, les produits 10 de valorisation à l'état gazeux (hydrocarbure(s), dioxyde de carbone (CO₂), dihydrogène (H₂), vapeur d'eau) forment avec ladite huile 2 de craquage de ladite dispersion 6 de craquage, une mousse 9 (huile/gaz) en expansion du fait du développement de la réaction de craquage.

Dans certains modes de réalisation, la chambre 127 de mélange et/ou la chambre 137 de rendement peuvent être munies d'au moins un générateur d'ultrasons disposé pour stimuler le craquage catalytique dans la dispersion 6 de craquage en cours de craquage. Le générateur d'ultrasons permet d'assurer par l'action mécanique vibratoire des ultrasons, une répartition homogène des espèces réactives et catalytiques lors du craquage et d'optimiser la répartition du matériau solide à l'état morcelé, du catalyseur et du composé alcalin dans ladite huile 2 de craquage en favorisant les chocs intermoléculaires et la réactivité des espèces en présence.

Tout autre moyen complémentaire de chauffage de ladite dispersion 6 de craquage dans la chambre 127 de mélange et/ou dans ladite chambre 137 de rendement est possible. En particulier, de tels moyens complémentaires de chauffage peuvent être adaptés pour assurer un chauffage complémentaire de ladite dispersion 6 de craquage compensateur de l'enthalpie de vaporisation des produits de valorisation formés du fait du craquage catalytique.

Le réacteur 120 de craquage est muni d'un dôme 139 de collecte des produits de valorisation à l'état gazeux formés du fait du craquage catalytique. Le dôme 139 délimite au-dessus du réacteur 120 de craquage un espace 140 clos étanche aux fluides gazeux, contenant une atmosphère 14 gazeuse s'étendant au contact de ladite dispersion 6 de craquage.

Dans un procédé selon l'invention, l'atmosphère 14 gazeuse s'étendant dans le dôme 139 est maintenue à une pression inférieure à la pression atmosphérique. Une telle dépression maintenue notamment dans le dôme 139 au contact de la mousse 9 résultant du craquage catalytique en cours, permet de réduire l'énergie de dissociation des espèces chimiques lors du craquage et d'abaisser ladite température de craquage et donc de réduire l'apport énergétique nécessaire à cette dissociation, réduction qui permet un abaissement de la température à une valeur inférieure à la température de formation de coke.

L'atmosphère 14 gazeuse s'étendant dans le dôme 139 peut être placée et maintenue - notamment transitoirement- sous une pression inférieure à la pression atmosphérique au moyen d'une pompe 115 aspirante, ou pompe à vide, mécanique communiquant avec l'atmosphère gazeuse du dôme 139 de collecte des produits 10 de valorisation à l'état gazeux.

Selon certains autres modes de réalisation particuliers, l'atmosphère 14 gazeuse s'étendant dans le dôme 139 peut être maintenue à une pression inférieure à la pression atmosphérique par un procédé comprenant une condensation dynamique d'un débit d'une deuxième huile inerte, dite huile 12 de condensation, de l'état gazeux expansé vers l'état liquide condensé, ce débit de ladite huile 12 de condensation à l'état gazeux expansé étant créé dans ladite pompe à vide 130 thermochimique par vaporisation/condensation de ladite huile 12 de condensation par chauffage dans un bouilleur 147 chauffé par des moyens de chauffage classiques.

Dans ces autres modes de réalisation particuliers, ladite huile 12 de condensation est une huile inerte vis-à-vis du craquage ca'alytique -c'est-à-dire une huile qui ne subit pas de modification chimique lorsqu'elle est placée dans des conditions de température propres au craquage et au contact des produits de valorisation à l'état gazeux-. Elle est choisie pour être vaporisable à une température supérieure à la température de vaporisation de chaque produit 10 de valorisation formé du fait du craquage. Ladite huile 12 de condensation est ainsi choisie pour que les produits 10 de valorisation formés du fait du craquage soient à l'état gazeux à la température de vaporisation/condensation de ladite huile 12 de condensation sous la même pression de craquage.

Dans ces autres modes de réalisation particuliers, ladite pompe à vide 130 thermochimique comprend un bouilleur 147 adapté pour contenir une quantité de ladite huile 12 de condensation, choisie pour présenter une température de vaporisation supérieure (mais peu supérieure) à la température de craquage catalytique. Le bouilleur 147 est muni de moyens de chauffage de ladite huile 12 de condensation à une température supérieure mais proche de la température de vaporisation de ladite huile 12 de condensation à ladite pression de craquage et supérieure à la température de condensation, sous cette même pression, des produits 10 de valorisation gazeux formés du fait du craquage. Ladite huile 12 de condensation est une huile thermique stable chimiquement dans les conditions de son emploi dans un procédé de craquage catalytique selon l'invention. Ladite huile 12 de condensation est choisie pour ne pas subir de dégazage lors de son chauffage sous pression réduite et pour ne pas former de mousse. Par exemple, ladite huile 12 de condensation est une huile minérale présentant 26 atomes de carbone dont la température de vaporisation à la pression atmosphérique est de l'ordre de 412°C et dont la température de vaporisation sous une pression de 50 hPa est de l'ordre de 290°C et de valeur proche de ladite température de craquage choisie.

Dans ces autres modes de réalisation particuliers, le bouilleur 147 est surmonté d'un organe 146 tubulaire d'acheminement des produits 10 de valorisation formés dans le réacteur 120 de craquage du fait du craquage, vers un dispositif 131 de condensation fractionnée. L'organe 146 tubula re présente :
- un tronçon, dit tronçon 162 de condensation, inférieur communiquant vers le bas avec le bouilleur 147, latéralement avec l'atmosphère du réacteur 120 de craquage et vers le haut avec un tronçon, dit tronçon 149 de perte de charge, intermédiaire de l'organe 146 tubulaire. Ledit tronçon 162 de condensation est réfrigéré en cela qu'il s'étend vers l'extérieur au contact de l'air atmosphérique à température ambiante. Ledit tronçon 162 de condensation est adapté pour initier une condensation de vapeurs de ladite huile 12 de condensation s'élevant à partir du bouilleur 147, créer une dépression dans ledit tronçon 162 de condensation du fait de cette condensation et pour, en combinaison avec un tronçon, dit tronçon 149 de perte de charge, intermédiaire surmontant ledit tronçon 162 de condensation, maintenir ledit tronçon 162 de condensation et l'atmosphère du réacteur 120 de craquage en dépression, ce par quoi une différence de pression est établie entre ledit tronçon 162 de condensation et un tronçon, dit tronçon 163 de tirage thermique, supérieur de l'organe 146 tubulaire s'étendant au-dessus dudit tronçon 149 de per e de charge ;
- un tronçon, dit tronçon 149 de perte de charge, intermédiaire muni de plateaux étagés réfrigérants, formant un maillage 150 métallique de haute densité et adapté pour favoriser les échanges thermiques permettant la poursuite du refroidissement et la condensation des vapeurs de ladite huile 12 de condensation dans ledit tronçon 149 de perte de charge et un reflux du condensat formé en direction et dans le bouilleur 147. Le maillage 150 métallique favorise les échanges thermiques entre l'intérieur et l'extérieur dudit tronçon 149 de perte de charge et la poursuite du refroidissement de ladite huile 12 de condensation à l'état gazeux conduisant à sa condensation au contact de ce maillage 150 métallique. Le maillage 150 métallique est constitué de grilles ou tamis porteurs d'un enchevêtrement d'éléments métalliques denses, assimilables à une compression de copeaux mais permet la montée des gaz dans l'organe 146 tubulaire et la retombée des condensats dans le bouilleur 147. Le maillage 150 métallique crée une perte de charge du fait de la densité des éléments métalliques. Cette perte de charge permet le maintien dynamique de la dépression dans ledit tronçon 162 de condensation et dans ledit tronçon 149 de perte de charge en combinaison avec le changement d'état dynamique de ladite huile 12 de condensation de l'état gazeux expansé à l'état liquide condensé. Ledit tronçon 162 de condensation et ledit tronçon 149 de perte de charge permettent en combinaison de maintenir une dépression dans ledit tronçon 162 de condensation et dans le réacteur 120 de craquage ;
- un tronçon, dit tronçon 163 de tirage thermique, supérieur s'étendant à partir dudit tronçon 149 de perte de charge et adapté pour entrainer les produits 10 de valorisation gazeux vers le dispositif 131 de condensation fractionnée.

L'organe 146 tubulaire est de préférence de forme cylindrique de révolution présentant selon toute section droite transversale un diamètre suffisant pour permettre une circulation des produits 10 de valorisation gazeux issus du craquage sous une pression inférieure à la pression atmosphérique, notamment au plus égale à 100 hPa -par exemple de l'ordre de 300 mm- et une hauteur choisie pour permettre une montée des produits 10 de valorisation gazeux sous l'effet d'un tirage thermique-par exemple de l'ordre de 4000 mm-.

Ledit tronçon 162 de condensation s'étend en regard d'une extrémité 148 débouchante du dôme 139 de sorte que la dépression formée dans ledit tronçon 162 de condensation et dans ledit tronçon 149 de perte de charge (du fait du changement d'état et de la condensation de ladite huile 12 de condensation de l'état gazeux expansé vers l'état liquide condensé), se propage dans le dôme 139 dont l'atmosphère est elle-même maintenue en dépression. Une dépression est ainsi maintenue dans l'atmosphère du dôme 139, du réacteur 120 de craquage, et de l'organe 146 tubulaire du fait de la condensation gaz/liquide de ladite huile 12 de condensation au contact du maillage 150 métallique et de la perte de charge associée. La réaction de craquage procède ainsi dans le réacteur 120 de craquage et dans la chambre 137 de rendement à une pression, dite pression de craquage, inférieure à la pression atmosphérique et à une température au moins égale à ladite température de craquage de chaque composé hydrocarboné à ladite pression de craquage. Le craquage se produit sans formation de coke, de dioxines et/ou de furannes du fait de la pression réduite qui réduit l'énergie nécessaire à la dissociation des composés hydrocarbonés et la température de leur décomposition, à une quantité d'énergie qui reste inférieure à la quantité d'énergie nécessaire à la formation de coke, de dioxines et/ou de furannes.

Dans certains modes de réalisation, ledit tronçon 149 de perte de charge est avantageusement muni d'une gaine 158 externe de réfrigération des vapeurs de ladite huile 12 de condensation et de condensation de ces vapeurs. La gaine 158 de réfrigération s'étend en regard dudit tronçon 162 de condensation et en regard de la partie inférieure dudit tronçon 149 de perte de charge. La gaine 158 de réfrigération peut être parcourue par un débit d'un fluide caloporteur d'échange d'énergie thermique favorisant la condensation de ladite huile 12 de condensation.

Le dôme 139 de collecte des produits 10 de valorisation à l'état gazeux formés du fait du craquage catalytique communique par son extrémité 148 débouchante avec ledit tronçon 162 de condensation, ce par quoi les vapeurs des produits 10 de valorisation à l'état gazeux formés du fait du craquage se mélangent avec ladite huile 12 de condensation à l'état gazeux issue du bouilleur 147 et sont entrainées par cette dernière dans l'organe 146 tubulaire. Dans ledit tronçon 162 de condensation et dans ledit tronçon 149 de perte de charge, seules les vapeurs de ladite huile 12 de condensation se liquéfient dès lors que ladite huile 12 de condensation est choisie pour présenter une température de condensation supérieure à la température de condensation des produits 10 de valorisation formés du fait du craquage et supérieure à ladite température de craquage.

L'inventeur a déterminé qu'il est nécessaire pour maintenir l'atmosphère du réacteur 120 de craquage à une pression de craquage inférieure à la pression atmosphérique, notamment au plus égale à 100 hPa, de prévoir que le débit volumique des vapeurs condensées de ladite huile 12 de condensation soit au moins égal au débit de formation sous la même pression des produits 10 de valorisation à l'état gazeux formés du fait du craquage. Il suffit pour ce faire d'ajuster la température de chauffage de ladite huile 12 de condensation dans le bouilleur 147 de façon à contrôler le débit de formation des vapeurs d'huile 12 de condensation dont la condensation dans ledit tronçon 162 de condensation et dans ledit tronçon 149 de perte de charge est totale du fait de la capacité d'évacuation de l'énergie calorifique par ledit tronçon 149 de perte de charge. Il a aussi déterminé que les vapeurs de ladite huile 12 de condensation formées dans le bouilleur 147 à une température par exemple de l'ordre de 290°C, température proche de la température des vapeurs des produits de valorisation (par exemple 280°C) formés lors du craquage ne sont pas chauffées significativement par leur mélange avec les vapeurs des produits de valorisation, de sorte que le refroidissement rapide du mélange dans l'organe 146 tubulaire conduise rapidement à la condensation de ladite huile 12 de condensation dans ledit tronçon 162 de condensation et dans ledit tronçon 149 de perte de charge, le condensat retournant dans le bouilleur 147 à une température très proche de la température de vaporisation de ladite huile 12 de condensation, permettant une vaporisation sous pression réduite par un faible apport d'énergie.

Rien n'empêche que lors de la retombée du condensat de ladite huile 12 de condensation vers le bouilleur 147, tout ou partie de ladite huile 12 de condensation se vaporise au contact des vapeurs chaudes de produits 10 de valorisation formés du fait du craquage dans le réacteur 120 de craquage, et conduise à une augmentation du vide par condensation de ladite huile 12 de condensation vaporisée à chauffage constant dans le bouilleur 147. Il convient alors de réduire l'énergie apportée au bouilleur 147 par un contrôle en retour de la température régnant dans ledit tronçon 149 de perte de charge.

L'énergie apportée au bouilleur 147 peut être de toute nature. Par exemple, l'énergie peut être apportée au bouilleur 147 par combustion d'une partie des produits 10 de valorisation formés du fait du craquage catalytique. Toute autre source d'énergie est possible.

L'organe 146 tubulaire est muni dans sa partie 151 supérieure d'une vanne 152 de communication avec un dispositif 131 de condensation fractionnée. Tout type de dispositif 131 de condensation fractionnée peut être utilisé. Le dispositif 131 de condensation fractionnée peut être choisi pour permettre une production d'un mélange d'alcanes de diverses longueurs de chaine hydrocarbonée par refroidissement et condensation des vapeurs des produits 10 de valorisation formés lors du craquage. Le dispositif 131 de condensation fractionnée peut être choisi pour permettre un fractionnement, au moyen d'une colonne de distillation à pression atmosphérique connue en elle-même, et dans laquelle seront séparés les gazoles et les kérosènes, les gaz résiduels (CO₂, H₂) étant recueillis après la séparation d'une éventuelle présence d'eau. Dans certains modes de réalisation dans lesquels la production de dihydrogène (H₂) et de dioxyde de carbone (CO₂) sont recherchés, ces gaz non condensés issus de la réaction peuvent être séparés par osmose.

Dans une phase de démarrage du procédé de craquage catalytique mis en œuvre à une pression de craquage inférieure à la pression atmosphérique, notamment à une pression de craquage au plus égale à 100 hPa, on porte ladite huile 2 de craquage à une température proche -notamment à une température de l'ordre de 280°C- de ladite température de craquage d'au moins un composé hydrocarboné de la dispersion 6 de craquage à ladite pression de craquage. Dans cette phase de démarrage, le réacteur 120 de craquage est exempt de tout composé hydrocarboné et la dispersion 6 de craquage est maintenue dans le convoyeur 126 de chargement de ladite dispersion 6 de craquage dans le réacteur 120 de craquage. Aucun craquage ne se produit. Dans le bouilleur 147, ladite huile 12 de condensation est maintenue à une température juste inférieure à sa température de vaporisation. La pompe 115 aspirante mécanique est ensuite activée de façon à placer l'atmosphère de l'organe 146 tubulaire, de la chambre 137 de rendement du réacteur 120 de craquage et du bouilleur 147 sous une dépression (dite pression d'initiation) de vide maximum de l'ordre de ou inférieur à 5 hPa. La pompe 115 aspirante mécanique aspire les gaz présents dans cet espace clos et abaisse la pression de l'atmosphère gazeuse dans le réacteur 120 de craquage et dans ladite pompe à vide 130 thermochimique. Dans certains modes de réalisation, la pompe 115 aspirante mécanique est arrêtée lorsque la pression atteint la valeur de dépression souhaitée de l'ordre de 5 h Pa, la dépression étant maintenue.

Dans une phase ultérieure à la phase de démarrage, on porte la température de chauffage du bouilleur 147 à une température légèrement supérieure à la température de vaporisation de ladite huile 12 de condensation sous cette pression inférieure à 5 hPa, ce par quoi des vapeurs de ladite huile 12 de condensation sont produites et montent par aspiration dans l'organe 146 tubulaire, ce par quoi la pression augmente. Les vapeurs de ladite huile 12 de condensation étant portées à une température faiblement supérieure à leur température de vaporisation sous pression réduite, ces vapeurs condensent en partie basse de l'organe 146 tubulaire, dans ledit tronçon 162 de condensation et dans ledit tronçon 149 de perte de charge en maintenant en dépression l'atmosphère du dôme 139, de l'extrémité 148 débouchante du dôme 139 et de l'organe 146 tubulaire. Un régime permanent s'établit, maintenant l'atmosphère du réacteur de craquage à une pression proche de ladite pression de craquage. Dès lors que ce régime d'équilibre est atteint, un débit de ladite dispersion 6 de craquage est introduite dans la chambre 127 de 'élange et d'initiation de la réaction de craquage, ce par quoi la réaction de craquage d'au moins un composé hydrocarboné est initiée à une température proche de 280°C sous une pression de l'ordre de 5 hPa. Les vapeurs des produits 10 de valorisation formées du fait du craquage se répartissent dans tout le volume en dépression et se mélangent en partie inférieure de l'organe 146 tubulaire avec les vapeurs de ladite huile 12 de condensation. La pression augmente dans l'atmosphère gazeuse dans le réacteur 120 de craquage et dans ladite pompe à vide 130 thermochimique . Ledit tronçon 162 de condensation et ledit tronçon 149 de perte de charge se comportent comme une pompe à vide thermochimique dynamique assimilable à une pompe de maintien de l'atmosphère sous pression réduite. Dès lors que le volume gazeux des produits 10 de valorisation formés dans le réacteur 120 de craquage du fait du craquage catalytique est compensé par le volume libéré du fait de la condensation de ladite huile 12 de condensation dans ledit tronçon 162 de condensation et dans ledit tronçon 149 de perte de charge, une dépression, notamment une pression au plus égale à 100 hPa, est maintenue dans l'espace 140 clos du dispositif. Cette dépression dans le réacteur 120 de craquage permet un craquage catalytique efficace à basse température sans formation de coke, de dioxines et/ou de furannes. Cette pression de craquage de l'atmosphère 14 gazeuse commune au réacteur 120 de craquage et à ladite pompe à vide 130 thermochimique est ajustable par l'énergie calorifique apportée au bouilleur 147. Pour une même quantité de produits 10 de valorisation gazeux formés du fait du craquage, la variation du volume de ladite huile 12 de condensation à l'état gazeux consécutif à la condensation fait varier le volume occupé par les produits 10 de valorisation gazeux et la pression dans l'atmosphère gazeuse.

Dans la phase ultérieure à la phase de démarrage, rien n'empêche de prévoir d'ajuster la température dans le convoyeur 104 de séchage/désoxygénation à une température proche de 180°C, la température dans le convoyeur 126 de chargement de ladite dispersion 6 de craquage dans le réacteur 120 de craquage à une température proche de 240 - 250°C et la température de ladite huile 2 de craquage du réacteur 120 de craquage à une température sensiblement égale à ladite température de craquage de chaque composé hydrocarboné sous pression de l'ordre de 50 hPa. La durée de préchauffage à 180°C du convoyeur 104 de séchage/désoxygénation peut être de l'ordre de 60 min à 90 min, la durée de préchauffage à 240 - 250°C du convoyeur 126 de chargement de ladite dispersion 6 de craquage dans le réacteur 120 de craquage peut être de l'ordre de 30 min à 60 min et la durée de préchauffage du bain de ladite huile 2 de craquage remplissant le réacteur 120 de craquage d'un volume de l'ordre de 3000 L peut être de l'ordre de 15 min à 30 min. Dès l'introduction dans le réacteur de craquage, d'un débit de ladite dispersion 6 de craquage et d'un débit de ladite huile 2 de craquage chauffée à une température supérieure à ladite température de craquage de chaque composé hydrocarboné de ladite dispersion 6 de craquage, de sorte que le mélange soit porté à une température supérieure à ladite température de craquage de chaque composé hydrocarboné de ladite dispersion 6 de craquage à ladite pression de craquage, le craquage catalytique est initié et des produits 10 de valorisation sont formés.

Dans certains modes de réalisation, l'organe 146 tubulaire est muni en partie 151 supérieure d'une entrée 154 périphérique d'introduction de produits 11 de valorisation à l'état liquide dans l'organe 146 tubulaire. Cette entrée 154 est destinée à introduire un débit contrôlé de produits 11 de valorisation à l'état liquide dans l'organe 146 tubulaire dont la vaporisation dans l'organe 146 tubulaire, au contact de vapeurs chaudes des produits 10 de valorisation gazeux, renforce le tirage thermique et la montée des vapeurs de produits 10 de valorisation gazeux formées du fait du craquage.

L'inventeur a observé et l'expérience a confirmé que les masses volumiques des produits 10 de valorisation à l'état gazeux formés du fait du craquage, tels que les alcanes, le dioxyde de carbone (CO₂), le dihydrogène (H₂) et le cas échéant l'eau (H₂O) sont très inférieures à la masse volumique de la vapeur de ladite huile 12 de condensation. Ainsi, dès lors que ces vapeurs de faible masse volumique ont été attirées en une zone 157 de vide maximum, elles ne peuvent pas redescendre dans ladite pompe à vide 130 thermochimique et dans un milieu de masse volumique moyenne plus élevée que leur propre masse volumique, et qui, en outre est en cours d'ascension rapide dans l'organe 146 tubulaire. Ainsi, poussées vers le haut de l'organe 146 tubulaire, les vapeurs des produits 10 de valorisation formés à l'état gazeux du fait du craquage progressent au-dessus de la zone 157 de vide maximum, dans le maillage 150 métallique.

L'inventeur a observé qu'il est possible d'accentuer le mouvement ascensionnel des vapeurs des produits 10 de valorisation gazeux et entrainer ces vapeurs vers le haut de l'organe 146 tubulaire, en introduisant un débit de carburant 11 liquide en partie haute de l'organe 146 tubulaire. Ce carburant liquide se vaporise par chauffage au contact des vapeurs chaudes des produits 10 de valorisation progressant vers le haut de l'organe 146 tubulaire, les vapeurs du carburant 11 formées par cet échauffement présentant nécessairement une température inférieure à la température des produits 10 de valorisation en progression vers le haut de l'organe 146 tubulaire. Les vapeurs froides du carburant 11 formées en périphérie à l'intérieur de l'organe 146 tubulaire permettent un entrainement axial des vapeurs chaudes des produits de valorisation par amélioration du tirage thermique. Les vapeurs chaudes des produits 10 de valorisation et de masse volumique plus faible sont entrainées vers le haut de l'organe 146 tubulaire. Les vapeurs froides du carburant introduit sont réchauffées lors de leur progression vers le bas de l'organe 146 tubulaire, puis sont entrainées vers le haut par un débit descendant de vapeurs de carburant 11. Un mouvement continue s'établit. L'expérience a montré que, sous condition d'une hauteur suffisante dudit tronçon de tirage, le tirage thermique est suffisant avec l'injection d'une proportion de l'ordre de 15 à 20 % du bilan net du carburant produit et réintroduite à sa température de sortie de la distillation, par exemple à une température de l'ordre de 130°C.

Dans certains modes de mise en œuvre particuliers, après une interruption de longue durée du fonctionnement du dispositif 100 de craquage, des vapeurs inflammables sont susceptibles de s'être accumulées dans le dispositif 100 de craquage -notamment dans le dôme 139, dans ladite pompe à vide 130 thermochimique et/ou dans le maillage 150 métallique de l'organe poreux-. Il convient lors de la phase de démarrage, d'ouvrir des vannes (non représentées) de dégazage pendant une étape de préchauffage du dispositif 100 de craquage. Puis, les vannes de dégazage étant maintenues ouvertes, on initie la mise en température du dispositif 100 de craquage en activant les circuits de recyclage de ladite huile 2 de craquage et les premiers et/ou deuxième moyens 125,132 de chauffage de ladite huile 2 de craquage. On porte ladite huile 2 de craquage circulant dans le dispositif 100 de craquage à une température proche de ladite température de craquage.

En parallèle, on porte ladite huile 12 de condensation dans ledit bouilleur 147 à une température inférieure mais proche de ladite température de craquage. À l'issue de cette étape de préchauffage, il est procédé à la fermeture des vannes de dégazage et la mise en marche de la pompe 115 aspirante mécanique de façon à placer l'atmosphère dudit réacteur 120 de craquage et de ladite pompe 130 à vide thermochimique (étanches aux gaz) à ladite pression d'initiation, inférieure à ladite pression de craquage mais insuffisamment faible pour pouvoir déclencher la vaporisation de ladite huile 12 de condensation dans le bouilleur 147. Lorsque l'atmosphère est à ladite pression d'initiation, le chauffage de ladite huile 12 de condensation est augmenté dans ledit bouilleur 147 de façon à initier une vaporisation immédiate de ladite huile 12 de condensation. La pression augmente du fait de cette vaporisation. Un thermostat agit sur le bouilleur 147 pour stabiliser la température au bas dudit tronçon 162 de condensation au niveau de ladite température de craquage. Lorsque la pression atteint ladite pression de craquage dans ledit tronçon 162 de condensation, la vapeur de ladite huile 12 de condensation condense. Il s'établit alors un régime permanent de vaporisation/condensation à ladite température de craquage et à ladite pression de craquage.

Dans le mode de réalisation décrit, un débit de ladite huile 2 de craquage -notamment une huile 2 de craquage recyclée- exempte de tout matériau 1 hydrocarboné, de tout catalyseur 7 de craquage et de tout composé 8 alcalin est préchauffé par les deuxième moyens 132 de chauffage à une température supérieure à ladite température de craquage, par exemple comprise entre 310°C et 320°C, telle que le mélange dans la zone 128 de mélange par convergence de ladite huile 2 de craquage chaude et de ladite dispersion 6 de craquage atteigne et dépasse (pour compenser des pertes et l'enthalpie de vaporisation des produits de valorisation) ladite température de craquage d'au moins un -notamment de chaque- composé hydrocarboné de ladite dispersion 6 de craquage à ladite pression de craquage. Ladite réaction de craquage est initiée et des produits 10 de valorisation à l'état gazeux sont formés du fait de cette réaction. La pression augmente dans l'atmosphère dudit réacteur 120 de craquage et de ladite pompe 130 à vide thermochimique qui rentre en fonction : le débit de condensation de ladite huile 12 de condensation augmente et dans le bouilleur 147 l'ébullition diminue ou s'arrête : la pression diminue et se stabilise à ladite pression de craquage. Inversement, lorsque la pression diminue dans l'atmosphère dudit réacteur 120 de craquage et de ladite pompe 130 à vide thermochimique, la condensation de ladite huile 12 de condensation diminue et dans le bouilleur 147 l'ébullition s'initie ou augmente : la pression augmente et se stabilise à ladite pression de craquage.

Une zone de dépression se forme au centre dudit tronçon 162 de condensation du fait de la condensation et la retombée de ladite huile 12 de condensation dans le bouilleur 147 et par l'expulsion vers le haut des produits 10 de valorisation gazeux issus du craquage qui ne peuvent pas redescendre sous l'effet de la pression dynamique formée par le débit gazeux en partie basse dudit tronçon 149 de perte de charg .

### EXEMPLE 1 : Craquage catalytique de sciure de bois

De la sciure de bois est soumise à un craquage catalytique sous une pression de 50 hPa pour former un hydrocarbure d'une composition moyenne présentant 13 atomes de carbone (C₁₃H28) à raison de 100 kg/h, du dihydrogène (H2) et du dioxyde de carbone (CO2). Le craquage catalytique d'une tonne de sciure de bois conduit à la formation de 679 kg de CO2, de 306 kg d'hydrocarbure tridécane (C₁₃H₂₈) et de 15 kg de dihydrogène (H₂) gazeux, correspondant respectivement la production de 1,4 mole/sec de dioxyde de carbone (CO₂), de 0,15 mole/sec de tridécane (C₁₃H₂₈) et de 0,69 mole/sec de dihydrogène (H₂) gazeux. Le volume de produits de valorisation gazeux formés du fait du craquage est de l'ordre de 2.2 mole/sec pour une augmentation du volume occupé par ces produits de valorisation gazeux de l'ordre de 2,0 L/sec. Pour compenser cette augmentation du volume des produits 10 de valorisation dans l'atmosphère du réacteur de craquage et maintenir une pression de 50 hPa, une huile minérale comprenant 26 atomes de carbone (C₂₆), de poids moléculaire (PM 366) est vaporisée dans le bouilleur de façon à former 821 g/sec d'huile minérale à l'état gazeux dont la condensation compense la formation des produits 10 de valorisation gazeux.

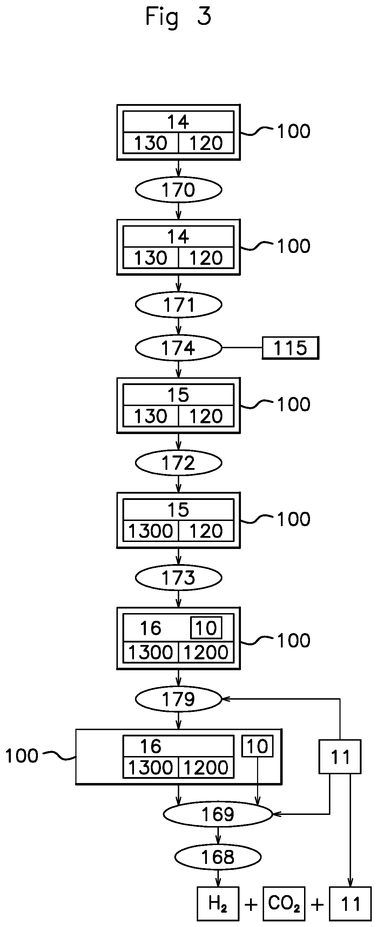

Un schéma synoptique d'un procédé de production de produits 10 de valorisation -notamment de carburant 11, de dioxyde de carbone (CO₂) et/ou de de dihydrogène (H₂) gazeux- par craquage catalytique à basse température et à pression réduite, c'est-à-dire inférieure à la pression atmosphérique, d'un matériau 1 solide -notamment d'un déchet- morcelé comprenant au moins un composé 13 hydrocarboné selon l'invention est représenté en figure 3.

On met en œuvre un procédé selon l'invention dans un dispositif 100 de craquage comprenant un réacteur 120 de craquage et une pompe à vide 130 thermochimique formant une atmosphère 14 gazeuse commune à la pression atmosphérique. Dans un procédé selon l'invention, lors d'une phase 170 de préparation préalable à l'initiation du craquage catalytique sous pression réduite, on réalise un préchauffage adapté pour qu'un débit de ladite dispersion 6 de craquage et un débit de ladite huile 2 de craquage puissent être introduits dans le réacteur 120 de craquage chacun à une température adaptée pour pouvoir atteindre ladite température de craquage à la pression de craquage et initier le craquage catalytique d'au moins un -notamment de chaque- composé hydrocarboné lors de leur introduction dans le réacteur 120 de craquage. Pour ce faire, on préchauf e notamment :
- ladite dispersion 6 de craquage pour que le débit de ladite dispersion 6 de craquage atteigne dans le convoyeur 126 de chargement de ladite dispersion 6 de craquage dans la chambre 127 de mélange et d'initiation de la réaction, une température de l'or re de 245°C ;
- ladite huile 2 de craquage pour que le débit de ladite huile 2 de craquage atteigne dans le réacteur 120 de craquage et dans la chambre 127 de mélange et de d'initiation de la réaction de craquage une température de l'ordre de 280°C.

Rien n'empêche bien sûr de prévoir un préchauffage de l'ensemble des compositions, réactifs, catalyseurs et dispersions du matériau 1 solide à l'état morcelé dans ladite huile 2 de craquage utilisées dans l'unité 110 de préparation de ladite dispersion 6 de craquage préalablement à son craquage dans le réacteur 120 de craquage. Rien n'empêche de prévoir de chauffer le débit de ladite huile 2 de craquage pour qu'elle atteigne dans la gaine 108 de chauffage du convoyeur 104 de séchage/désoxygénation une température de l'ordre de 180°C. Rien n'empêche de prévoir de préchauffer la dispersion 3 hydrocarbonée et/ou la dispersion 4 séchée et/ou la dispersion 5 dégazée et ladite huile 2 de craquage à une température aussi proche que possible de sa température optimale d'utilisation. On réalise ce préchauffage par tout moyen approprié pour permettre une préparation de chaque composition à une température la plus proche possible de sa température d'utilisation.

Dans un procédé selon le mode de réalisation représenté en figure 3, lorsque les températures susmentionnées sont atteintes et que ladite dispersion 6 de craquage est prête à être introduite dans le réacteur 120 de craquage, une étape de mise 171 en chauffe de ladite huile 12 de condensation dans le bouilleur 147 de ladite pompe à vide 130 thermochimique est initiée. Par ce chauffage 171 de ladite huile 12 de condensation, ladite huile 12 de condensation est portée à une température aussi proche que possible mais toutefois inférieure à la température de vaporisation de ladite huile 12 de condensation à la pression susmentionnée de l'ordre de 5 hPa. Ladite huile 12 de condensation reste à l'état liquide condensé dans le bouilleur 147 en préchauffage et dont l'atmosphère 14 gazeuse est à la pression atmosphérique.

Dans un procédé selon le mode de réalisation représenté en figure 3, lorsque les températures susmentionnées sont atteintes, que ladite dispersion 6 de craquage est prête à être introduite dans le réacteur 120 de craquage et que ladite huile de condensation est préchauffée en deçà de sa température de vaporisation à 5 hPa, on réalise un pompage 174 de l'atmosphère 14 commune contenue dans le dôme 139 du réacteur 120 de craquage et dans ladite pompe à vide 130 thermochimique au moyen de la pompe 115 aspirante mécanique. Du fait de ce pompage 174, l'atmosphère 15 commune du dôme 139, du réacteur 120 de craquage et de ladite pompe à vide 130 thermochimique est mise en dépression, c'est-à-dire par exemple à une pression de l'ordre de 5 hPa, ce par quoi les gaz présents dans l'atmosphère 15 commune en dépression sont évacués. Du fait que la température de ladite huile 12 de condensation est inférieure à la température de vaporisation de ladite huile 12 de condensation à 5 hPa, ladite huile 12 de condensation est à l'état liquide condensé dans le bouilleur 147.

Dans un procédé selon le mode de réalisation représenté en figure 3, on chauffe ladite huile 12 de condensation dans le bouilleur 147 de ladite pompe à vide 130 thermochimique à une température supérieure à la température de vaporisation de ladite huile 12 de condensation à une pression de 5 hPa, de façon que de ladite huile 12 de condensation passe à l'état gazeux expansé, circule dans ladite pompe à vide 130 thermochimique et condense au moins partiellement dans ledit tronçon 162 de condensation et/ou au contact dudit tronçon 149 de perte de charge. Du fait de cette condensation 172 dans ledit tronçon 162 de condensation et au contact du maillage 150 métallique (le cas échéant, amplifiée par une circulation d'un fluide caloporteur dans la gaine 158 de réfrigération) dans ledit tronçon 149 de perte de charge, l'atmosphère 15 gazeuse commune du dôme 139, du réacteur 120 de craquage et de ladite pompe à vide 130 thermochimique est maintenue en dépression, à une pression de l'ordre de 5 hPa.

Dans un procédé selon le mode de réalisation représenté en figure 3, une phase 173 d'initiation du craquage est réalisée par une introduction de ladite dispersion 6 de craquage dans le réacteur 120 de craquage et par mélange avec et au contact de ladite huile 2 de craquage chauffée de sorte que le mélange atteigne ladite température de craquage d'au moins un composé hydrocarboné dans le réacteur 120 de craquage. Un tel chauffage peut, par exemple, être atteint du fait d'un apport d'un débit de ladite huile 2 de craquage chauffée à une température supérieure à ladite température de craquage de chaque composé hydrocarboné de ladite dispersion 6 de craquage. Le mélange -notamment en zone 128 de convergence dans la chambre 127 de mélange du réacteur 120 de craquage- du débit de ladite dispersion 6 de craquage préchauffée et du débit de ladite huile 2 de craquage chauffée à une température supérieure à ladite température de craquage de chaque composé hydrocarboné est réalisé de façon que ladite température de craquage de chaque composé hydrocarboné soit atteinte du fait de ce mélange. Des produits 10 de valorisation à l'état gazeux sont formés du fait du craquage catalytique et sont libérés dans l'atmosphère 15 gazeuse du réacteur 100 de craquage dans laquelle la pression augmente.

L'augmentation de la pression de l'atmosphère 16 gazeuse -du fait de la formation des produits 10 de valorisation gazeux- à une valeur comprise entre 30 hPa et 50 hPa est compensée par la condensation de ladite huile 12 de condensation dans ladite pompe à vide 130 thermochimique , par chauffage de ladite huile 12 de condensation à une valeur juste supérieure à la température de vaporisation de ladite huile 12 de condensation à la pression de l'atmosphère 16 gazeuse. Ladite pression de craquage est atteinte et maintenue du fait de l'ajustement du chauffage et de la vaporisation de ladite huile 12 de condensation. Une dépression partielle permanente -notamment d'une valeur au plus égale à 50 hPa- est établie par le chauffage, la vaporisation et la condensation de ladite huile 12 de condensation dans ladite pompe à vide 130 thermochimique . Une telle dépression partielle permanente est maintenue dès lors que le débit volumique de condensation de ladite huile 12 de condensation égale, en valeur absolue et à cette pression de 50 hPa, le débit volumique de production des produits 10 de valorisation gazeux formés du fait du craquage catalytique. Le débit volumique de condensation de ladite huile 12 de condensation est avantageusement contrôlé par l'ajustement du débit de vaporisation de ladite huile 12 de condensation et par l'énergie thermique procurée pour cette vaporisation par le bouilleur 147.

Dans un procédé selon le mode de réalisation représenté en figure 3, les produits 10 de valorisation gazeux formés à ladite pression de craquage -notamment au plus égale à 100 hPa- du fait du craquage catalytique montent dans le dôme 139 du réacteur 120 de craquage et dans ledit tronçon 149 de perte de charge de ladite pompe à vide 130 thermochimique, dans lequel la température est trop élevée pour permettre leur condensation dès lors que les vapeurs de ladite huile 12 de condensation sont à une température au moins égale à la température de vaporisation de ladite huile 12 de condensation à la pression de craquage (au plus égale à 60 hPa) qui est elle-même supérieure à la température de vaporisation de chacun des produits 10 de valorisation produits du fait du craquage. Les vapeurs chaudes des produits 10 de valorisation atteignant ledit tronçon 149 de perte de charge en montant dans l'organe 146 tubulaire. Les vapeurs chaudes de ladite huile 12 de condensation sont de masse volumique supérieure à la masse volumique des vapeurs chaudes des produits 10 de valorisation à la même température de sorte que les produits 10 de valorisation à l'état gazeux sont empêchés de descendre dans ladite pompe à vide 130 thermochimique et qu'ils s'accumulent dans le maillage 150 métallique avant que la partie supérieure de cette accumulation soit entrainés vers le haut de l'organe 146 tubulaire par tirage thermique.

Il en est d'autant plus ainsi que, dans un procédé selon le mode de réalisation représenté en figure 3, un tirage 179 thermique est induit par un apport en partie 154 supérieure de l'organe 146 tubulaire d'un débit de carburant 11 à l'état liquide. Le carburant 11 de ce débit de carburant -dont la température est nécessairement inférieure à la température des produits 10 de valorisation gazeux progressant en direction de la partie 154 supérieure de l'organe 146 tubulaire- est vaporisé par et au contact des vapeurs de ces produits 10 de valorisation ascendants dont la température, en absence de tout refroidissement forcé, est maintenue à une température de l'ordre de 240°C. Du fait de la différence de température entre le débit de carburant vaporisé et le débit de produits de valorisation, la masse volumique du carburant vaporisé est nécessairement supérieure à la masse volumique des produits 10 de valorisation gazeux, le tirage 179 thermique s'établit dans l'organe 146 tubulaire de grande longueur. Du fait de la différence de la masse volumique et de la différence de température des deux gaz, les conditions du tirage 179 thermique sont réunies et les produits 10 de valorisation progressent dans l'organe 146 tubulaire et accèdent au dispositif 131 de condensation fractionnée.

Dans un procédé selon le mode de réalisation représenté en figure 3, l'extrémité 145 supérieure de l'organe 146 tubulaire communiquant avec la partie inférieure d'un dispositif, notamment d'une colonne 131 de condensation fractionnée, on procède à une étape 169 de condensation fractionnée -notamment à une étape de distillation fractionnée- permettant de séparer les condensats (kérosène, gazole, ... etc) selon leur température de vaporisation/condensation. En sortie de la distillation, à une température de l'ordre de 130°C et à pression atmosphérique, le flux gazeux résiduel résultant de la condensation du kérosène est refroidi à une température inférieure à 100°C dans une colonne de condensation de l'eau. L'eau condensée est recueillie sous forme liquide au fond de la colonne de laquelle elle est extraite par gravité au moyen d'un siphon.

Dans un procédé selon le mode de réalisation représenté en figure 3, le dioxyde de carbone (CO₂) et le dihydrogène (H₂) gazeux sont séparés par osmose 168.

L'invention peut faire l'objet de nombreuses variantes et applications autres que celles décrites ci-dessus. En particulier, il va de soi que sauf indication contraire, les différentes caractéristiques structurelles et fonctionnelles de chacun des modes de réalisation décrits ci-dessus ne doivent pas être considérées comme combinées et/ou étroitement et/ou inextricablement liées les unes aux autres, mais au contraire comme de simples juxtapositions. En outre, les caractéristiques structurelles et/ou fonctionnelles des différents modes de réalisation décrits ci-dessus peuvent faire l'objet en tout ou partie de toute juxtaposition différente ou de toute combinaison différente. Par exemple, le dimensionnement, l'organisation dans l'espace et la conception des différents éléments constitutifs du dispositif de craquage sont sujets à des infinités de variantes.

## Revendications

1. Procédé de production d'au moins un produit (10) de valorisation, choisi dans le groupe formé des alcanes carburants à chaines courtes, des alcènes, du dihydrogène gazeux et de dioxyde de carbone, par craquage catalytique à basse température d'un matériau (1) solide à l'état morcelé, sans formation de coke, de dioxines et/ou de furannes, dans lequel un débit d'une composition, dite dispersion (6) de craquage, comprenant :
- une première huile, dite huile (2) de craquage, inerte vis-à-vis du craquage catalytique ;
- un matériau (1) solide à l'état morcelé comprenant au moins un composé (13) hydrocarboné ;
- au moins un catalyseur (7) de craquage catalytique, et ;
- au moins un composé (8) alcalin ;
est porté à une température, dite température de craquage, comprise entre 250°C et 300°C et choisie pour permettre une production d'au moins un produit (10) de valorisation à l'état gazeux par craquage catalytique d'au moins un composé (13) hydrocarboné du matériau (1) solide à l'état morcelé dans ladite dispersion (6) de craquage ;
le débit de ladite dispersion (6) de craquage à ladite température de craquage est placé dans un réacteur (120) de craquage étanche aux gaz et au contact d'une atmosphère (14) gazeuse à une pression, dite pression de craquage, inférieure à la pression atmosphérique,
**caractérisé en ce que** l'atmosphère (14) gazeuse est maintenue à ladite pression de craquage par une communication d'échange gazeux entre l'atmosphère (14) gazeuse dudit réacteur (120) de craquage et l'atmosphère gazeuse d'un dispositif, dit pompe à vide (130) thermochimique, générateur d'une dépression formée du fait d'un changement d'état, d'un état gazeux expansé à un état liquide condensé, d'une deuxième huile inerte, dite huile (12) de condensation, chauffée à reflux à une température supérieure à la température de vaporisation de ladite huile (12) de condensation à ladite pression de craquage dans ladite pompe à vide (130) thermochimique, le changement d'état de l'état gazeux expansé à l'état liquide condensé de ladite huile (12) de condensation étant provoqué dans ladite pompe à vide (130) thermochimique en communication d'échange gazeux avec l'atmosphère (14) gazeuse dudit réacteur (120) de craquage,
ladite huile (12) de condensation étant choisie pour que sa température de changement d'état soit au niveau de ladite température de craquage à ladite pression de craquage.

2. Procédé selon la revendication 1, **caractérisé en ce que** ladite pression de craquage est au plus égale à 100 hPa.

3. Procédé selon l'une des revendications 1 ou 2, **caractérisé en ce que** le changement d'état de ladite huile (12) de condensation de l'état gazeux expansé à l'état liquide condensé est initié dans un tronçon, dit tronçon (162) de condensation, inférieur d'un organe (146) tubulaire de ladite pompe à vide (130) thermochimique ;
l'organe (146) tubulaire permettant un acheminement des produits (10) de valorisation formés dans le réacteur (120) de craquage du fait du craquage, vers un dispositif (131) de condensation fractionnée;
ledit tronçon (162) de condensation étant en communication de fluide gazeux avec l'atmosphère gazeuse du réacteur (120) de craquage ;
ledit tronçon (162) de condensation étant adapté pour pouvoir recevoir le débit de ladite huile (12) de condensation à l'état gazeux, abaisser la température de ladite huile (12) de condensation à l'état gazeux à une température inférieure à la température de condensation de ladite huile (12) de condensation à ladite pression de craquage, permettre une condensation du débit de ladite huile (12) de condensation de l'état gazeux expansé à l'état liquide condensé, et générer la dépression du fait de cette condensation.

4. Procédé selon l'une des revendications 1 à 3, **caractérisé en ce que** le changement d'état de ladite huile (12) de condensation de l'état gazeux expansé à l'état liquide condensé se poursuit en partie inférieure d'un tronçon, dit tronçon (149) de perte de charge, intermédiaire de l'organe (146) tubulaire, surmontant ledit tronçon (162) de condensation, et présentant un organe poreux comprenant un maillage (150) métallique adapté pour :
- permettre un échange thermique avec ladite huile (12) de condensation et un changement d'état de ladite huile (12) de condensation de l'état gazeux expansé à l'état liquide condensé, et ;
- maintenir du fait d'une perte de charge, une différence de pression entre ledit tronçon (162) de condensation et la partie supérieure de l'organe (146) tubulaire.

5. Procédé selon l'une des revendications 1 à 4, **caractérisé en ce que** lors du craquage catalytique, ladite huile (12) de condensation est chauffée à une température à peine supérieure à la température de vaporisation de ladite huile (12) de condensation à ladite pression de craquage, dans un contenant, dit bouilleur, d'un organe (147) de chauffage formant une partie inférieure de ladite pompe à vide (130) thermochimique.

6. Procédé selon la revendication 5, **caractérisé en ce que** lors d'une étape (170) préparatoire du craquage catalytique ;
- un bain de ladite huile (2) de craquage est porté à ladite température de craquage dans le réacteur (120) de craquage ;
- l'atmosphère (14) gazeuse commune du réacteur (120) de craquage et de ladite pompe à vide (130) thermochimique est portée à une pression, dite pression d'initiation, inférieure à ladite pression de craquage par pompage (174) de cette atmosphère (14) gazeuse au moyen d'une pompe (115) aspirante mécanique ;
- un bain de ladite huile (12) de condensation est préchauffé dans ledit bouilleur (147) à une température inférieure et proche de la température de vaporisation de ladite huile (12) de condensation à ladite pression d'initiation, puis ;
- le pompage (174) mécanique de l'atmosphère (14) gazeuse du réacteur (120) de craquage et de ladite pompe à vide (130) thermochimique à ladite pression d'initiation est interrompu, puis ;
- ladite huile (12) de condensation est chauffée dans ledit bouilleur (147) à une température supérieure mais proche de la température de vaporisation de ladite huile (12) de condensation à ladite pression de craquage, ce par quoi des vapeurs de ladite huile (12) de condensation montent dans ledit tronçon de condensation et condensent au contact dudit tronçon (162) de condensation et dans ledit tronçon (149) de perte de charge, ce par quoi la température étant constante, il s'établit un régime continu de vaporisation/condensation, maintenant l'atmosphère gazeuse du réacteur de craquage au niveau de ladite pression de craquage du fait de la continuité de la température au niveau de ladite température de craquage ;
et **en ce que** lors d'une étape (173) d'initiation du craquage catalytique, un débit de ladite dispersion (6) de craquage et un débit d'huile de craquage recyclée chaude sont introduits dans le réacteur (120) et mélangés en un même point du réacteur (120) de craquage de façon que ladite dispersion (6) de craquage soit portée et maintenue à ladite température de craquage à ladite pression de craquage, ce par quoi des produits (10) de valorisation à l'état gazeux sont formés dans l'atmosphère (14) gazeuse à ladite pression de craquage.

7. Procédé selon l'une des revendications 1 à 6, **caractérisé en ce que** les produits (10) de valorisation à l'état gazeux produits du fait du craquage catalytique sont entrainés dans un tronçon, dit tronçon (163) de tirage thermique, supérieur de l'organe (146) tubulaire puis dans un dispositif (131) de condensation fractionnée, sous l'effet d'un tirage thermique induit par une introduction en partie haute de ladite pompe à vide (130) thermochimique, d'un débit d'un carburant (11) à l'état liquide, le carburant (11) à l'état liquide étant vaporisé lors de sa descente dans ledit tronçon (163) de tirage thermique en direction dudit tronçon (149) de perte de charge,
le carburant (11) ainsi vaporisé étant à une température inférieure à la température des produits (10) de valorisation à l'état gazeux produits du fait du craquage ;
le débit de carburant (11) vaporisé permettant une ascension par tirage thermique, du débit des produits (10) de valorisation à l'état gazeux vers le dispositif (131) de condensation fractionnée.

8. Procédé selon la revendication 7, **caractérisé en ce que** le débit de carburant (11) vaporisé est chauffé au contact des produits (10) de valorisation à l'état gazeux produits du fait du craquage catalytique et recyclé dans ladite pompe à vide (130) thermochimique et dans le dispositif (131) de condensation fractionnée.

9. Procédé selon l'une des revendications 1 à 8, **caractérisé en ce que** ladite dispersion (6) de craquage est chauffée dans le réacteur (120) de craquage par mélange d'un débit de ladite dispersion (6) de craquage et d'un débit de ladite huile (2) de craquage préalablement chauffée à une température supérieure à ladite température de craquage de chaque composé (13) hydrocarboné du matériau (1) solide à ladite pression de craquage, le mélange étant réalisé de façon que ladite dispersion (6) de craquage atteigne ladite température de craquage sans formation de coke, de dioxines et/ou de furannes.

10. Procédé selon l'une des revendications 1 à 9, **caractérisé en ce que** ladite dispersion (6) de craquage est soumise à un traitement par des ultrasons lors du craquage catalytique.

11. Procédé selon l'une des revendications 1 à 10, **caractérisé en ce qu'**on réalise une condensation d'au moins un produit (10) de valorisation à l'état gazeux formé du fait du craquage catalytique, dans des conditions propres à former un carburant (11) à l'état liquide.

12. Procédé selon la revendication 11, **caractérisé en ce que** du dioxyde de carbone est extrait de produits gazeux résiduels de ladite condensation, par osmose ou tout autre moyen adapté.

13. Dispositif (100) de craquage catalytique à basse température d'un matériau (1) solide à l'état morcelé, sans formation de coke, de dioxines et/ou de furannes, le dispositif (100) comprenant un réacteur (120) de craquage étanche aux gaz et adapté pour chauffer un débit d'une composition, dite dispersion (6) de craquage, comprenant :
- une première huile, dite huile (2) de craquage, inerte vis-à-vis du craquage catalytique ;
- un matériau (1) solide à l'état morcelé comprenant au moins un composé (13) hydrocarboné ;
- au moins un catalyseur (7) de craquage catalytique, et ;
- au moins un composé (8) alcalin ;
à une température, dite température de craquage, comprise entre 250°C et 300°C et choisie pour permettre une production d'au moins un produit (10) de valorisation à l'état gazeux par craquage catalytique d'au moins un composé (13) hydrocarboné du matériau (1) solide à l'état morcelé dans ladite dispersion (6) de craquage ;
et pour maintenir ladite dispersion (6) de craquage au contact d'une atmosphère (14) gazeuse dans le réacteur (120) de craquage ;
le dispositif (100) de craquage étant **caractérisé en ce qu'**il comprend des moyens adaptés pour maintenir l'atmosphère (14) gazeuse à une pression, dite pression de craquage, inférieure à la pression atmosphérique,
**caractérisé en ce qu'**il comprend un dispositif, dit pompe à vide (130) thermochimique, en communication d'échange gazeux avec l'atmosphère (14) gazeuse dudit réacteur (120) de craquage,
ladite pompe à vide (130) thermochimique étant adaptée pour permettre un changement d'état d'une deuxième huile inerte, dite huile (12) de condensation, de l'état gazeux expansé à l'état liquide condensé, ladite dite huile (12) de condensation étant chauffée à une température supérieure à la température de vaporisation de ladite huile (12) de condensation à ladite pression de craquage et pour maintenir l'atmosphère (14) gazeuse du réacteur (120) de craquage à ladite pression de craquage du fait d'une dépression créée du fait de ce changement d'état,
ladite huile (12) de condensation étant choisie pour que sa température de changement d'état soit au niveau de ladite température de craquage à ladite pression de craquage.

14. Dispositif selon la revendication 13, **caractérisé en ce que** ladite pompe à vide (130) thermochimique comprend :
- un organe, dit bouilleur (147), de chauffage de ladite huile (12) de condensation adapté pour chauffer ladite huile (12) de condensation à ladite température de vaporisation, et débouchant dans ;
- un organe (146) tubulaire d'acheminement des produits (10) de valorisation à l'état gazeux formés dans le réacteur (120) de craquage du fait du craquage, vers un dispositif (131) de condensation fractionnée, l'organe (146) tubulaire surmontant l'organe (147) de chauffage et débouchant dans l'organe (147) de chauffage et formant :
o un tronçon, dit tronçon (162) de condensation, inférieur en communication de fluide gazeux avec l'atmosphère gazeuse du réacteur (120) de craquage et adapté pour pouvoir recevoir le débit de ladite huile (12) de condensation à l'état gazeux, pour abaisser sa température à une température inférieure à la température de vaporisation de ladite huile (12) de condensation à ladite pression de craquage et permettre une condensation du débit de ladite huile (12) de condensation de l'état gazeux expansé à l'état liquide condensé, et pour maintenir la pression de l'atmosphère gazeuse du réacteur (120) de craquage à ladite pression de craquage ;
o un tronçon, dit tronçon (149) de perte de charge, intermédiaire, surmontant ledit tronçon (162) de condensation, muni d'un organe poreux comprenant un maillage (150) métallique, adapté pour compléter le changement d'état de ladite huile (12) de condensation, de l'état gazeux expansé à l'état liquide condensé ;
ledit tronçon (162) de condensation étant monté en communication d'échange gazeux avec ledit tronçon (149) de perte de charge et avec l'atmosphère (14) gazeuse commune du réacteur (120) de craquage et de ladite pompe à vide (130) thermochimique.

15. Dispositif selon l'une des revendications 13 ou 14, **caractérisé en ce que** le dispositif (131) de condensation fractionnée est un dispositif (131) de distillation/condensation d'au moins un produit (10) de valorisation à l'état gazeux et de sa conversion en carburant (11) liquide.

16. Dispositif selon la revendication 15, **caractérisé en ce que** l'organe (146) tubulaire forme un tronçon, dit tronçon (163) de tirage thermique, supérieur s'étendant vers le bas à partir dudit tronçon (149) de perte de charge et adapté pour entrainer les produits (10) de valorisation à l'état gazeux vers le dispositif (131) de condensation fractionnée ;
ledit tronçon (163) de tirage thermique étant muni en partie (151) supérieure d'une entrée (154) d'un débit de produits (11) de valorisation à l'état liquide dans ledit tronçon (163) de tirage thermique permettant une montée des produits (10) de valorisation à l'état gazeux par renforcement du tirage thermique dans l'organe (146) tubulaire et l'introduction de ces produits (10) de valorisation dans le dispositif (131) de condensation fractionnée.

## Patentansprüche

1. Verfahren zur Herstellung mindestens eines Verwertungsprodukts (10), das aus der aus den kurzkettigen Kraftstoff-Alkanen, den Alkenen, gasförmigem Diwasserstoff und Kohlendioxid gebildeten Gruppe gewählt ist, durch katalytisches Niedertemperatur-Cracken eines festen Materials (1) in zerkleinertem Zustand ohne Bildung von Koks, Dioxinen und/oder Furanen, wobei ein Strom einer Zusammensetzung, Cracking-Dispersion (6) genannt, umfassend:
- ein erstes Öl, Cracking-Öl (2) genannt, das gegenüber dem katalytischen Cracken inert ist;
- ein festes Material (1) in zerkleinertem Zustand, das mindestens eine Kohlenwasserstoffverbindung (13) umfasst;
- mindestens einen Katalysator (7) zum katalytischen Cracken, und;
- mindestens eine alkalische Verbindung (8);
auf eine Temperatur, Cracking-Temperatur genannt, gebracht wird, die zwischen 250 °C und 300 °C liegt und so gewählt ist, dass sie eine Herstellung mindestens eines Verwertungsprodukts (10) in gasförmigem Zustand durch katalytisches Cracken mindestens einer Kohlenwasserstoffverbindung (13) des festen Materials (1) in zerkleinertem Zustand in der Cracking-Dispersion (6) ermöglicht;
der Strom der Cracking-Dispersion (6) mit der Cracking-Temperatur in einen gasdichten Cracking-Reaktor (120) und in Kontakt mit einer gasförmigen Atmosphäre (14) mit einem Druck, Cracking-Druck genannt, unter dem atmosphärischen Druck gebracht wird,
**dadurch gekennzeichnet, dass** die gasförmige Atmosphäre (14) auf dem Cracking-Druck gehalten wird durch eine Gasaustauschverbindung zwischen der gasförmigen Atmosphäre (14) des Cracking-Reaktors (120) und der gasförmigen Atmosphäre einer Vorrichtung, thermochemische Vakuumpumpe (130) genannt, die einen Unterdruck erzeugt, der aufgrund einer Zustandsänderung von einem ausgedehnten gasförmigen Zustand zu einem kondensierten flüssigen Zustand eines inerten zweiten Öls, Kondensationsöl (12) genannt, gebildet wird, das im Rücklauf auf eine Temperatur über der Verdampfungstemperatur des Kondensationsöls (12) bei dem Cracking-Druck in der thermochemischen Vakuumpumpe (130) erhitzt wird, wobei die Zustandsänderung von dem ausgedehnten gasförmigen Zustand zu dem kondensierten flüssigen Zustand des Kondensationsöls (12) in der thermochemischen Vakuumpumpe (130) bewirkt wird, die in Gasaustauschverbindung mit der gasförmigen Atmosphäre (14) des Cracking-Reaktors (120) steht,
wobei das Kondensationsöl (12) so gewählt ist, dass seine Zustandsänderungstemperatur so hoch wie die Cracking-Temperatur bei dem Cracking-Druck ist.

2. Verfahren nach Anspruch 1, **dadurch gekennzeichnet, dass** der Cracking-Druck höchstens 100 hPa beträgt.

3. Verfahren nach einem der Ansprüche 1 oder 2, **dadurch gekennzeichnet, dass** die Zustandsänderung des Kondensationsöls (12) von dem ausgedehnten gasförmigen Zustand zu dem kondensierten flüssigen Zustand in einem unteren Abschnitt, Kondensationsabschnitt (162) genannt, eines röhrenförmigen Organs (146) der thermochemischen Vakuumpumpe (130) initiiert wird;
wobei das röhrenförmige Organ (146) ein Leiten der aufgrund des Crackens in dem Cracking-Reaktor (120) gebildeten Verwertungsprodukte (10) zu einer Vorrichtung (131) zur fraktionierten Kondensation ermöglicht;
wobei der Kondensationsabschnitt (162) in Gasfluidverbindung mit der gasförmigen Atmosphäre des Cracking-Reaktors (120) steht;
wobei der Kondensationsabschnitt (162) dazu angepasst ist, den Strom des Kondensationsöls (12) in gasförmigem Zustand aufnehmen zu können, die Temperatur des Kondensationsöls (12) in gasförmigem Zustand auf eine Temperatur unter der Kondensationstemperatur des Kondensationsöls (12) bei dem Cracking-Druck zu senken, eine Kondensation des Stroms des Kondensationsöls (12) von dem ausgedehnten gasförmigen Zustand zu dem kondensierten flüssigen Zustand zu ermöglichen und aufgrund dieser Kondensation den Unterdruck zu erzeugen.

4. Verfahren nach einem der Ansprüche 1 bis 3, **dadurch gekennzeichnet, dass** sich die Zustandsänderung des Kondensationsöls (12) von dem ausgedehnten gasförmigen Zustand zu dem kondensierten flüssigen Zustand im unteren Teil eines Zwischenabschnitts, Druckverlustabschnitt (149) genannt, des röhrenförmigen Organs (146) fortsetzt, der den Kondensationsabschnitt (162) überragt und ein poröses Organ aufweist, das ein Metallgitter (150) umfasst, das dazu angepasst ist:
- einen thermischen Austausch mit dem Kondensationsöls (12) und eine Zustandsänderung des Kondensationsöls (12) von dem ausgedehnten gasförmigen Zustand zu dem kondensierten flüssigen Zustand zu ermöglichen, und;
- aufgrund eines Druckverlustes eine Druckdifferenz zwischen dem Kondensationsabschnitt (162) und dem oberen Teil des röhrenförmigen Organs (146) aufrechtzuerhalten.

5. Verfahren nach einem der Ansprüche 1 bis 4, **dadurch gekennzeichnet, dass** das Kondensationsöl (12) beim katalytischen Cracken auf eine Temperatur knapp über der Verdampfungstemperatur des Kondensationsöls (12) bei dem Cracking-Druck in einem Behälter, Verdampfer genannt, eines Heizorgans (147) erhitzt wird, das einen unteren Teil der thermochemischen Vakuumpumpe (130) bildet.

6. Verfahren nach Anspruch 5, **dadurch gekennzeichnet, dass** bei einem vorbereitenden Schritt (170) des katalytischen Crackens;
- ein Bad des Cracking-Öls (2) auf die Cracking-Temperatur in dem Cracking-Reaktor (120) gebracht wird;
- die gemeinsame gasförmige Atmosphäre (14) des Cracking-Reaktors (120) und der thermochemischen Vakuumpumpe (130) durch Pumpen (174) dieser gasförmigen Atmosphäre (14) mittels einer mechanischen Saugpumpe (115) auf einen Druck, Initiierungsdruck, unter dem Cracking-Druck gebracht wird;
- ein Bad des Kondensationsöls (12) in dem Verdampfer (147) auf eine Temperatur unter und nahe der Verdampfungstemperatur des Kondensationsöls (12) bei dem Initiierungsdruck vorgewärmt wird, dann;
- das mechanische Pumpen (174) der gasförmigen Atmosphäre (14) des Cracking-Reaktors (120) und der thermochemischen Vakuumpumpe (130) bei dem Initiierungsdruck unterbrochen wird, dann;
- das Kondensationsöl (12) in dem Verdampfer (147) auf eine Temperatur über, aber nahe der Verdampfungstemperatur des Kondensationsöls (12) bei dem Cracking-Druck erhitzt wird, wodurch Dämpfe des Kondensationsöls (12) in den Kondensationsabschnitt aufsteigen und beim Kontakt mit dem Kondensationsabschnitt (162) und in dem Druckverlustabschnitt (149) kondensieren, wodurch sich, da die Temperatur konstant ist, ein kontinuierliches Verdampfung/Kondensation-System einstellt, wobei die gasförmige Atmosphäre des Cracking-Reaktors aufgrund der Kontinuität der Temperatur, die so hoch wie die Cracking-Temperatur ist, auf dem Cracking-Druck gehalten wird;
und dadurch, dass bei einem Initiierungsschritt (173) des katalytischen Crackens ein Strom der Cracking-Dispersion (6) und ein Strom von warmem rückgeführtem Cracking-Öl in den Reaktor (120) eingeleitet werden und an einer selben Stelle des Cracking-Reaktors (120) gemischt werden, so dass die Cracking-Dispersion (6) auf die Cracking-Temperatur bei dem Cracking-Druck gebracht und auf ihr gehalten wird, wodurch Verwertungsprodukte (10) in gasförmigem Zustand in der gasförmigen Atmosphäre (14) bei dem Cracking-Druck gebildet werden.

7. Verfahren nach einem der Ansprüche 1 bis 6, **dadurch gekennzeichnet, dass** die Verwertungsprodukte (10) in gasförmigem Zustand, die aufgrund des katalytischen Crackens hergestellt werden, in einen oberen Abschnitt, thermischer Auftriebsabschnitt (163) genannt, des röhrenförmigen Organs (146), dann in eine Vorrichtung (131) zur fraktionierten Kondensation befördert wird unter der Wirkung eines thermischen Auftriebs, der durch eine Einleitung im oberen Teil der thermischen Vakuumpumpe (130) eines Stroms eines Kraftstoffs (11) in flüssigen Zustand bewirkt wird, wobei der Kraftstoff (11) im flüssigen Zustand bei seinem Absinken in dem thermischen Auftriebsabschnitt (163) in Richtung des Druckverlustabschnitts (149) verdampft wird,
wobei der so verdampfte Kraftstoff (11) eine Temperatur unter der Temperatur der aufgrund des Crackens hergestellten Verwertungsprodukte (10) in gasförmigem Zustand aufweist;
wobei der Strom des verdampften Kraftstoffs (11) ein Aufsteigen durch thermischen Auftrieb des Stroms der Verwertungsprodukte (10) in gasförmigem Zustand zu der Vorrichtung (131) zur fraktionierten Kondensation ermöglicht.

8. Verfahren nach Anspruch 7, **dadurch gekennzeichnet, dass** der Strom des verdampften Kraftstoffs (11) beim Kontakt mit den Verwertungsprodukten (10) in gasförmigem Zustand, die aufgrund des katalytischen Crackens hergestellt werden, erhitzt wird und in die thermochemische Vakuumpumpe (130) und in die Vorrichtung (131) zur fraktionierten Kondensation zurückgeführt wird.

9. Verfahren nach einem der Ansprüche 1 bis 8, **dadurch gekennzeichnet, dass** die Cracking-Dispersion (6) in dem Cracking-Reaktor (120) erwärmt wird durch Mischen eines Stroms der Cracking-Dispersion (6) und eines Stroms des Cracking-Öls (2), das zuvor auf eine Temperatur über der Cracking-Temperatur jeder Kohlenwasserstoffverbindung (13) des festen Materials (1) bei dem Cracking-Druck erwärmt wird, wobei das Mischen so ausgeführt wird, dass die Cracking-Dispersion (6) die Cracking-Temperatur ohne Bildung von Koks, Dioxinen und/oder Furanen erreicht.

10. Verfahren nach einem der Ansprüche 1 bis 9, **dadurch gekennzeichnet, dass** die Cracking-Dispersion (6) bei dem katalytischen Cracken einer Ultraschallbehandlung unterzogen wird.

11. Verfahren nach einem der Ansprüche 1 bis 10, **dadurch gekennzeichnet, dass** man eine Kondensation mindestens eines Verwertungsprodukts (10) in gasförmigem Zustand, das aufgrund des katalytischen Crackens gebildet wird, unter zum Bilden eines Kraftstoffs (11) in flüssigem Zustand geeigneten Bedingungen ausführt.

12. Verfahren nach Anspruch 11, **dadurch gekennzeichnet, dass** Kohlendioxid aus den restlichen gasförmigen Produkten der Kondensation durch Osmose oder auf einem anderen geeigneten Weg extrahiert wird.

13. Vorrichtung (100) zum katalytischen Niedertemperaturcracken eines festen Materials (1) in zerkleinertem Zustand ohne Bildung von Koks, Dioxinen und/oder Furanen, wobei die Vorrichtung (100) einen Cracking-Reaktor (120) umfasst, der gasdicht ist und angepasst ist zum Erhitzen eines Stroms einer Zusammensetzung, Cracking-Dispersion (6) genannt, umfassend:
- ein erstes Öl, Cracking-Öl (2) genannt, das gegenüber dem katalytischen Cracken inert ist;
- ein festes Material (1) in zerkleinertem Zustand, das mindestens eine Kohlenwasserstoffverbindung (13) umfasst;
- mindestens einen Katalysator (7) zum katalytischen Cracken, und;
- mindestens eine alkalische Verbindung (8);
auf eine Temperatur, Cracking-Temperatur genannt, die zwischen 250 °C und 300 °C liegt und so gewählt ist, dass sie eine Herstellung mindestens eines Verwertungsprodukts (10) in gasförmigem Zustand durch katalytisches Cracken mindestens einer Kohlenwasserstoffverbindung (13) des festen Materials (1) in zerkleinertem Zustand in der Cracking-Dispersion (6) ermöglicht;
und zum Halten der Cracking-Dispersion (6) in Kontakt mit einer gasförmigen Atmosphäre (14) in dem Cracking-Reaktor (120);
wobei die Cracking-Vorrichtung (100) **dadurch gekennzeichnet ist, dass** sie Mittel umfasst, die dazu angepasst sind, die gasförmige Atmosphäre (14) auf einem Druck, Cracking-Druck genannt, unter dem atmosphärischen Druck zu halten,
**dadurch gekennzeichnet, dass** sie eine Vorrichtung, thermochemische Vakuumpumpe (130) genannt, umfasst, die in Gasaustauschverbindung mit der gasförmigen Atmosphäre (14) des Cracking-Reaktors (120) steht,
wobei die thermochemische Vakuumpumpe (130) dazu angepasst ist, eine Zustandsänderung eines inerten zweiten Öls, Kondensationsöl (12) genannt, von dem ausgedehnten gasförmigen Zustand zu dem kondensierten flüssigen Zustand zu ermöglichen, wobei das Kondensationsöl (12) auf eine Temperatur über der Verdampfungstemperatur des Kondensationsöls (12) bei dem Cracking-Druck erhitzt wird, und die gasförmige Atmosphäre (14) des Cracking-Reaktors (120) aufgrund eines durch diese Zustandsänderung geschaffenen Unterdrucks auf dem Cracking-Druck zu halten,
wobei das Kondensationsöl (12) so gewählt ist, dass seine Zustandsänderungstemperatur so hoch wie die Cracking-Temperatur bei dem Cracking-Druck ist.

14. Vorrichtung nach Anspruch 13, **dadurch gekennzeichnet, dass** die thermochemische Vakuumpumpe (130) umfasst:
- ein Organ, Verdampfer (147) genannt, zum Erhitzen des Kondensationsöls (12), das dazu angepasst ist, das Kondensationsöl (12) auf die Verdampfungstemperatur zu erhitzen, und das mündet in;
- ein röhrenförmiges Organ (146) zum Leiten der Verwertungsprodukte (10) in gasförmigem Zustand, die aufgrund des Crackens in dem Cracking-Reaktor (120) gebildet werden, zu einer Vorrichtung (131) zur fraktionierten Kondensation, wobei das röhrenförmige Organ (146) das Erhitzungsorgan (147) überragt und in das Erhitzungsorgan (147) mündet und bildet:
o einen unteren Abschnitt, Kondensationsabschnitt (162) genannt, der in Gasfluidverbindung mit der gasförmigen Atmosphäre des Cracking-Reaktors (120) steht und dazu angepasst, den Strom des Kondensationsöls (12) in gasförmigem Zustand aufnehmen zu können, seine Temperatur auf eine Temperatur unter der Verdampfungstemperatur des Kondensationsöls (12) bei dem Cracking-Druck zu senken und eine Kondensation des Stroms des Kondensationsöls (12) von dem ausgedehnten gasförmigen Zustand zu dem kondensierten flüssigen Zustand zu ermöglichen und den Druck der gasförmigen Atmosphäre des Cracking-Reaktors (120) auf dem Cracking-Druck zu halten;
o einen Zwischenabschnitt, Druckverlustabschnitt (149) genannt, der den Kondensationsabschnitt (162) überragt, mit einem porösen Organ versehen ist, das ein Metallgitter (150) umfasst, das dazu angepasst ist, die Zustandsänderung des Kondensationsöls (12) von dem ausgedehnten gasförmigen Zustand zu dem kondensierten flüssigen Zustand zu vollenden;
wobei der Kondensationsabschnitt (162) in Gasaustauschverbindung mit dem Druckverlustabschnitt (149) und mit der gemeinsamen gasförmigen Atmosphäre (14) des Cracking-Reaktors (120) und der thermochemischen Vakuumpumpe (130) montiert ist.

15. Vorrichtung nach einem der Ansprüche 13 oder 14, **dadurch gekennzeichnet, dass** die Vorrichtung (131) zur fraktionierten Kondensation eine Vorrichtung (131) zur Destillation/Kondensation mindestens eines Verwertungsprodukts (10) in gasförmigem Zustand und zu seiner Umwandlung in flüssigen Kraftstoff (11) ist.

16. Vorrichtung nach Anspruch 15, **dadurch gekennzeichnet, dass** das röhrenförmige Organ (146) einen oberen Abschnitt, thermischer Auftriebsabschnitt (163) genannt, bildet, der sich von dem Druckverlustabschnitt (149) aus nach unten hin erstreckt und dazu angepasst ist, die Verwertungsprodukte (10) in gasförmigem Zustand zu der Vorrichtung (131) zur fraktionierten Kondensation zu befördern;
wobei der thermische Auftriebsabschnitt (163) im oberen Teil (151) mit einem Einlass (154) für einen Strom von Verwertungsprodukten (11) in flüssigem Zustand in den thermischen Auftriebsabschnitt (163) versehen ist, der ein Aufsteigen der Verwertungsprodukte (10) in gasförmigem Zustand durch Verstärken des thermischen Auftriebs in dem röhrenförmigen Organ (146) und das Einleiten dieser Verwertungsprodukte (10) in die Vorrichtung (131) zur fraktionierten Kondensation ermöglicht.

## Claims

1. A method for producing at least one valorization product (10), chosen in the group formed of short-chain fuel alkanes, alkenes, dihydrogen gas and carbon dioxide, by catalytically cracking at a low temperature a fragmented solid material (1) without the formation of coke, dioxins and/or furans, in which a flow of a so-called cracking dispersion composition (6) comprising:
- a first oil, referred to a cracking oil (2), which is inert against the catalytic cracking,
- a fragmented solid material (1) including at least one hydrocarbon compound (13),
- at least one catalytic cracking catalyst (7), and
- at least one alkaline compound (8),
is brought to a temperature, referred to as the cracking temperature, of between 250°C and 300°C inclusive chosen so as to enable at least one gas valorization product (10) to be produced by catalytically cracking at least one hydrocarbon compound (13) of the fragmented solid material (1) in said cracking dispersion (6),
the flow of said cracking dispersion (6) at said cracking temperature is placed in a gastight cracking reactor (120) and in contact with a gas atmosphere (14) at a pressure, referred to as the cracking pressure, that is below atmospheric pressure,
**characterized in that** the gas atmosphere (14) is maintained at said cracking pressure through gas exchange communication between the gas atmosphere (14) of said cracking reactor (120) and the gas atmosphere of a device, referred to as a thermochemical vacuum pump (130), that generates a reduced pressure formed, by way of a change of state, from an expanded gas state to a condensed liquid state, a second inert oil, referred to as a condensation oil (12), which is refluxed at a temperature above the evaporation temperature of said condensation oil (12) at said cracking pressure in said thermochemical vacuum pump (130), the change of state of said condensation oil (12) from the expanded gas state to the condensed liquid state is brought about in said thermochemical vacuum pump (130) in gas exchange communication with the gas atmosphere (14) of said cracking reactor (120),
the condensation oil (12) being chosen so that its state-change temperature is at the level of said cracking temperature at said cracking pressure.

2. The method as claimed in claim 1 **characterized in that** said cracking pressure is at most equal to 100 hPa.

3. The method as claimed in either one of claims 1 or 2 **characterized in that** the change of state of said condensation oil (12) from the expanded gas state to the condensed liquid state is initiated in a lower so-called condensation section (162) of a tubular member (146) of said thermochemical vacuum pump (130),
the tubular member (146) enabling routing of the valorization products (10) formed in the cracking reactor (120) because of the cracking to a fractionated condensation device (131),
said condensation section (162) being in gas fluid communication with the gas atmosphere of the cracking reactor (120),
said condensation section (162) being adapted to be able to receive the flow of said condensation oil (12) in the gas state, to lower the temperature of said condensation oil (12) in the gas state to a temperature below the condensation temperature of said condensation oil (12) at said cracking pressure, to enable condensation of the flow of said condensation oil (12) from the expanded gas state to the condensed liquid state, and to generate the reduced pressure because of this condensation.

4. The method as claimed in any one of claims 1 to 3 **characterized in that** the change of state of said condensation oil (12) from the expanded gas state to the condensed liquid state continues in an intermediate lower so-called head loss section (149) of the tubular member (146) surmounting said condensation section (162) and including a porous member including a metal mesh (150) adapted:
- to enable exchange of heat with said condensation oil (12) and a change of state of said condensation oil (12) from the expanded gas state to the condensed liquid state, and
- to maintain because of a head loss a pressure difference between said condensation section (162) and the upper part of the tubular member (146).

5. The method as claimed in any one of claims 1 to 4 **characterized in that** during catalytic cracking said condensation oil (12) is heated to a temperature hardly above the evaporation temperature of said condensation oil (12) at said cracking pressure in a container termed a boiler of a heating member (147) forming a lower part of said thermochemical vacuum pump (130).

6. The method as claimed in claim 5 **characterized in that** during a preparatory step (170) of the catalytic cracking:
- a bath of said cracking oil (2) is heated to said cracking temperature in the cracking reactor (120),
- the gas atmosphere (14) common to the cracking reactor (120) and said thermochemical pump (130) is brought to a so-called initiation pressure below said cracking pressure by pumping (174) that gas atmosphere (14) by means of a mechanical suction pump (115),
- a bath of said condensation oil (12) is preheated in said boiler (147) to a temperature below and close to the evaporation temperature of said condensation oil (12) at said initiation pressure, then
- the mechanical pumping (174) of the gas atmosphere (14) of the cracking reactor (120) and of said thermochemical vacuum pump (130) at said initiation pressure is interrupted, then
- said condensation oil (12) is heated in said boiler (147) to a temperature above but close to the evaporation temperature of said condensation oil (12) at said cracking pressure, whereby vapor of said condensation oil (12) rises in said condensation section and condenses in contact with said condensation section (162) and in said head loss section (149), whereby, the temperature being constant, there is established a continuous regime of evaporation/condensation maintaining the gas atmosphere of the cracking reactor at the level of said cracking pressure because of the continuity of the temperature at the level of said cracking temperature,
and **in that** during a step (173) of initiation of the catalytic cracking a flow of said cracking dispersion (6) and a flow of hot recycled cracking oil are introduced into the reactor (120) and mixed at a common point of the cracking reactor (120) so that said cracking dispersion (6) is heated to and maintained at said cracking temperature at said cracking pressure, whereby valorization products (10) in the gas state are formed in the gas atmosphere (14) at said cracking pressure.

7. The method as claimed in any one of claims 1 to 6 **characterized in that** the valorization products (10) in the gas state produced because of the catalytic cracking are driven into an upper so-called thermal tapping section (163) of the tubular member (146) and then a fractionated condensation device (131) because of the effect of thermal tapping induced by introduction into the upper part of said thermochemical vacuum pump (130) of a flow of the fuel (11) in the liquid state, the fuel (11) in the liquid state evaporating as it descends said thermal tapping section (163) in the direction of said head loss section (149),
the fuel (11) evaporated in this way being at a temperature below the temperature of the valorization products (10) in the gas state produced because of the cracking,
the flow of evaporated fuel (11) enabling ascension by thermal tapping of the flow of valorization products (10) in the gas state to the fractionated condensation device (131).

8. The method as claimed in claim 7 **characterized in that** the flow of evaporated fuel (11) is heated in contact with the valorization products (10) in the gas state produced because of the catalytic cracking and recycled in said thermochemical vacuum pump (130) and the fractionated condensation device (131).

9. The method as claimed in any one of claims 1 to 8 **characterized in that** said cracking dispersion (6) is heated in the cracking reactor (120) by mixing a flow of said cracking dispersion (6) and a flow of said cracking oil (2) previously heated to a temperature above said cracking temperature of each hydrocarbon compound (13) of the solid material (1) at said cracking pressure, the mixing being carried out so that said cracking dispersion (6) reaches said cracking temperature without formation of coke, dioxins and/or furans.

10. The method as claimed in any one of claims 1 to 9 **characterized in that** said cracking dispersion (6) is subjected to a treatment by ultrasound during the catalytic cracking.

11. The method as claimed in any one of claims 1 to 10 **characterized in that** there is carried out condensation of at least one valorization product (10) in the gas state formed because of the catalytic cracking under conditions suitable for forming a fuel (11) in the liquid state.

12. The method as claimed in claim 11 **characterized in that** carbon dioxide is extracted from the residual gas products of said condensation by osmosis or by any other appropriate means.

13. A device (100) for catalytic cracking at low temperature of a fragmented solid material (1) without formation of coke, dioxins and/or furans, the device (100) including a gastight cracking reactor (120) adapted to heat a flow of a so-called cracking dispersion composition (6), including
- a first oil, referred to a cracking oil (2), which is inert against the catalytic cracking,
- a fragmented solid material (1) including at least one hydrocarbon compound (13),
- at least one catalytic cracking catalyst (7), and
- at least one alkaline compound (8),
at a so-called cracking temperature between 250°C and 300°C inclusive and chosen to enable production of at least one valorization product (10) in the gas state by the catalytic cracking of at least one hydrocarbon compound (13) of the fragmented solid material (1) in said cracking dispersion (6),
and to maintain said cracking dispersion (6) in contact with a gas atmosphere (14) in the cracking reactor (120),
the cracking device (100) being **characterized in that** it includes means adapted to maintain the gas atmosphere (14) at a so-called cracking pressure below atmospheric pressure,
**characterized in that** it includes a so-called thermochemical vacuum pump device (130) in gas exchange communication with the gas atmosphere (14) of said cracking reactor (120),
said thermochemical vacuum pump (130) being adapted to enable a change of state of a second inert, so-called condensation oil (12) from the expanded gas state to the condensed liquid state, said condensation oil (12) being heated to a temperature above the evaporation temperature of said condensation oil (12) at said cracking pressure, and to maintain the gas atmosphere (14) of the cracking reactor (120) at said cracking pressure because of a reduced pressure created because of this change of state,
said condensation oil (12) being chosen so that its change of state temperature is at the level of said cracking temperature at said cracking pressure.

14. The device as claimed in claim 13 **characterized in that** said thermochemical vacuum pump (130) includes:
- a so-called boiler member (147) for heating said condensation oil (12) adapted to heat said condensation oil (12) to said evaporation temperature and discharging into
- a tubular member (146) for routing valorization products (10) in the gas state formed in the cracking reactor (120) because of the cracking to a fractionated condensation device (131), the tubular member (146) surmounting the heating member (147) and discharging into the heating member (147) and forming:
o a lower so-called condensation section (162) in gas-fluid communication with the gas atmosphere of the cracking reactor (120) and adapted to be able to receive the flow of said condensation oil (12) in the gas state to lower its temperature to a temperature below the evaporation temperature of said condensation oil (12) at said cracking pressure and to enable condensation of the flow of said condensation oil (12) from the expanded gas state to the condensed liquid state and to maintain the pressure of the gas atmosphere of the cracking reactor (120) at said cracking pressure,
o an intermediate so-called head loss section (149) surmounting said condensation section (162) provided with a porous member including a metal mesh (150) adapted to complete the change of state of said condensation oil (12) from the expanded gas state to the condensed liquid state,
said condensation section (162) being in gas exchange communication with said head loss section (149) and with the common gas atmosphere (14) of the cracking reactor (120) and said thermochemical vacuum pump (130).

15. The device as claimed in either one of claims 13 or 14 **characterized in that** the fractionated condensation device (131) is a device (131) for distillation/condensation of at least one valorization product (10) in the gas state and its conversion into liquid fuel (11).

16. The device as claimed in claim 15 **characterized in that** the tubular member (146) forms an upper so-called thermal tapping section (163) extending downward from said head loss section (149) and adapted to drive the valorization products (10) in the gas state toward the fractionated condensation device (131),
said thermal tapping section (163) being provided in its upper part (151) with an inlet (154) for a flow of valorization products (11) in the liquid state in said thermal tapping section (163) enabling rising of the valorization products (10) in the gas state by reinforcing the thermal tapping in the tubular member (146) and the introduction of these valorization products (10) into the fractionated condensation device (131).
